# EUROPEAN PATENT SPECIFICATION

(11) **EP 4 126 356 B1**
(45) Date of publication and mention of the grant of the patent: **07.06.2023**
(21) Application number: 21722528.3
(22) Date of filing: 30.03.2021
(51) Int. Cl.: B01J 35/04, B01J 23/42, B01J 23/44, B01J 23/02, B01J 23/18, B01J 23/58, B01J 23/644, B01J 23/656, B01J 35/00, B01J 37/02, B01D 53/94

(54) **LAYERED ZONE-COATED DIESEL OXIDATION CATALYSTS FOR IMPROVED CO/HC CONVERSION AND NO OXIDATION**
DIESELOXIDATIONSKATALYSATOR MIT SCHICHT- UND ZONENSTRUKTUR ZUR VERBESSERTEN HC- UND CO-UMWANDLUNG UND NO-OXIDIERUNG
CATALYSEUR D'OXYDATION DIESEL À STRUCTURE EN COUCHES ET EN ZONES POUR CONVERSION AMÉLIORÉE DU MONOXYDE DE CARBONE ET DES HYDROCARBURES AINSI QU'UNE OXYDATION AMÉLIORÉE DU MONOXYDE D'AZOTE

(30) Priority: 30.03.2020 US 202063001775 P
(43) Date of publication of application: 08.02.2023
(73) Proprietor: Johnson Matthey Public Limited Company, London EC4A 4AB (GB)
(72) Inventor: CHIFFEY, Andrew Francis, Royston Hertfordshire SG8 5HE (GB); COLE, Kieran, Royston Hertfordshire SG8 5HE (GB); DURAUD, Amelie, Royston Hertfordshire SG8 5HE (GB); GOLDYN, Kamila, Royston Hertfordshire SG8 5HE (GB); MOREAU, Francois, Royston Hertfordshire SG8 5HE (GB); O'BRIEN, Matthew, Royston Hertfordshire SG8 5HE (GB)
(74) Representative: Nunn, Andrew Dominic
(86) International application number: PCT/GB2021/050793
(87) International publication number: WO 2021/198680

(56) References cited:
- US-A1- 2015 202 572
- US-A1- 2015 273 452
- US-A1- 2018 065 086
- US-A1- 2019 193 024

## Description

### FIELD OF THE INVENTION

The invention relates to an oxidation catalyst for a diesel engine and to an exhaust system for a diesel engine comprising the oxidation catalyst.

### BACKGROUND

Diesel engines produce an exhaust emission that generally contains at least four classes of pollutant that are legislated against by inter-governmental organizations throughout the world: carbon monoxide (CO), unburned hydrocarbons (HCs), oxides of nitrogen (NOₓ) and particulate matter (PM). Emissions standards for diesel engines, whether stationary or mobile (e.g. vehicular diesel engines), are being progressively tightened. There is a need to provide improved catalysts and exhaust systems that are able to meet these standards, which are cost-effective.

For diesel engines, an oxidation catalyst (known as a diesel oxidation catalyst (DOC)) is typically used to treat the exhaust gas produced by such engines. Diesel oxidation catalysts generally catalyse the oxidation of (1) carbon monoxide (CO) to carbon dioxide (CO₂), and (2) HCs to carbon dioxide (CO₂) and water (H₂O). Exhaust gas temperatures for diesel engines, particularly for light-duty diesel vehicles, are relatively low (e.g. 400° C) and so one challenge is to develop durable catalyst formulations with low "light-off" temperatures.

The activity of oxidation catalysts, such as DOCs, is often measured in terms of its "light-off' temperature, which is the temperature at which the catalyst starts to perform a particular catalytic reaction or performs that reaction to a certain level. Normally, "light-off' temperatures are given in terms of a specific level of conversion of a reactant, such as conversion of carbon monoxide. Thus, a T₅₀ temperature is often quoted as a "light-off' temperature because it represents the lowest temperature at which a catalyst catalyses the conversion of a reactant at 50% efficiency.

Exhaust systems for diesel engines may include several emissions control devices. Each emissions control device has a specialized function and is responsible for treating one or more classes of pollutant in the exhaust gas. The performance of an upstream emissions control device can affect the performance of a downstream emissions control device. This is because the exhaust gas from the outlet of the upstream emissions control device is passed into the inlet of the downstream emissions control device. The interaction between each emissions control device in the exhaust system is important to the overall efficiency of the system.

Oxidation catalysts, such as diesel oxidation catalysts (DOCs), typically oxidize carbon monoxide (CO) and hydrocarbons (HCs) in an exhaust gas produced by a diesel engine. Diesel oxidation catalysts can also oxidize some of the nitric oxide (NO) that is present in the exhaust gas to nitrogen dioxide (NO₂). Even though nitrogen dioxide (NO₂) is itself a pollutant, the conversion of NO into NO₂ can be beneficial. The NO₂ that is produced can be used to regenerate particulate matter (PM) that has been trapped by, for example, a downstream diesel particulate filter (DPF) or a downstream catalysed soot filter (CSF). Generally, the NO₂ generated by the oxidation catalyst increases the ratio of NO₂:NO in the exhaust gas from the outlet of the oxidation catalyst compared to the exhaust gas at the inlet. This increased ratio can be advantageous for exhaust systems comprising a downstream selective catalytic reduction (SCR) catalyst or a selective catalytic reduction filter (SCRF^{™}) catalyst. The ratio of NO₂:NO in the exhaust gas produced directly by a diesel engine may be too low for optimum SCR or SCRF^{™} catalyst performance.

While it is generally advantageous to include an oxidation catalyst, such as a DOC, that has good NO₂ generation activity in an exhaust system, the use of an oxidation catalyst in this way can be problematic when seeking to obtain optimum performance from a downstream emissions control device (e.g. an SCR or SCRF^{™} catalyst). The (mean) average amount of NO₂ that is generated by an oxidation catalyst at a given exhaust gas temperature can vary considerably over its lifetime. This can lead to difficulties in calibrating the dosing of the nitrogenous reductant for performing active SCR.

Additionally, the preliminary findings presented on 27^{th} October 2020 on possible Euro 7 emission limits for light-duty and heavy-duty diesel vehicles of the European Commission CLOVE consortium of consultants tasked to work on recommendations thereon for the Advisory Group on Vehicle Emission Standards (AGVES) has recommended limits for N₂O as a powerful "greenhouse gas".

As emissions regulations become more stringent, there is a continuing goal to develop diesel oxidation catalyst (DOC) systems that provide improved performance, for example, light-off performance and optimized NO₂ generation. Consequently, the present invention is directed to a diesel oxidation catalyst with formulations and configurations that provide surprising improvements to HC and CO light-off and NO oxidation. It would also be desirable if such new catalyst designs included consideration to limit or suppress N₂O generation.

Applicant's WO 2015/110818A1 discloses an oxidation catalyst for treating an exhaust gas from a diesel engine and an exhaust system comprising the oxidation catalyst are described. The oxidation catalyst comprises: a first washcoat region for oxidising carbon monoxide (CO) and hydrocarbons (HCs), wherein the first washcoat region comprises a first platinum group metal (PGM) and a first support material; a second washcoat region for oxidising nitric oxide (NO), wherein the second washcoat region comprises platinum (Pt), manganese (Mn) and a second support material; and a substrate having an inlet end and an outlet end; wherein the second washcoat region is arranged to contact the exhaust gas at the outlet end of the substrate and after contact of the exhaust gas with the first washcoat region.

Applicant's WO 2015/110819A1 discloses an oxidation catalyst for treating an exhaust gas from a diesel engine comprising: a first washcoat region comprising platinum (Pt), manganese (Mn) and a first support material; a second washcoat region comprising a platinum group metal (PGM) and a second support material; and a substrate having an inlet end and an outlet end; wherein the second washcoat region is arranged to contact the exhaust gas at the outlet end of the substrate and after contact of the exhaust gas with the first washcoat region.

Applicant's WO 2017/064498A1 discloses an oxidation catalyst for treating an exhaust gas produced by a diesel engine comprising a catalytic region and a substrate, wherein the catalytic region comprises a catalytic material comprising: bismuth (Bi) or an oxide thereof; a platinum group metal (PGM) selected from the group consisting of (i) platinum (Pt), (ii) palladium (Pd) and (iii) platinum (Pt) and palladium (Pd); and a support material, which is a refractory oxide; wherein the platinum group metal (PGM) is supported on the support material; and wherein the bismuth (Bi) or an oxide thereof is supported on the support material and/or the refractory oxide comprises the bismuth or an oxide thereof.

WO 2011/082357A2 discloses an emission control catalyst doped with bismuth, manganese, or bismuth and manganese. The doped catalyst may be a palladium-gold catalyst or a platinum-based catalyst, or both. The doped palladium-gold catalyst and the doped platinum-based catalyst may be contained in a single washcoat layer or in different washcoat layers of a multi-brick, multi-zoned, or multi-layered emission control system. In all embodiments, zeolite may be added as a hydrocarbon absorbing component.

US patent publication no. 2015/273452 A1 discloses an oxidation catalyst for treating an exhaust gas from a diesel engine and an exhaust system comprising the oxidation catalyst. The oxidation catalyst comprises: a first washcoat region for adsorbing NOx, wherein the first washcoat region comprises a zeolite catalyst, wherein the zeolite catalyst comprises a noble metal and a zeolite; a second washcoat region for oxidising nitric oxide (NO), wherein the second washcoat region comprises platinum (Pt) and a support material; and a substrate having an inlet end and an outlet end.

US patent publication no. 2019/193024 A1 discloses an oxidation catalyst for treating an exhaust gas produced by a diesel engine comprising a catalytic region and a substrate, wherein the catalytic region comprises a catalytic material comprising: bismuth (Bi) or an oxide thereof; an alkali metal or an oxide thereof; a platinum group metal (PGM) selected from the group consisting of (i) platinum (Pt), (ii) palladium (Pd) and (iii) platinum (Pt) and palladium (Pd); and a support material comprising a mixed oxide of alumina and silica, a mixed oxide of silica and a refractory oxide, a composite oxide of alumina and silica, a composite oxide of silica and a refractory oxide, alumina doped with a silica or silica doped with a refractory oxide.

US patent publication no. 2018/065086 A1 discloses an oxidation catalyst for treating an exhaust gas from a diesel engine and an exhaust system comprising the oxidation catalyst. The oxidation catalyst comprises: a first region for adsorbing NOx, wherein the first region comprises a molecular sieve catalyst, wherein the molecular sieve catalyst comprises a noble metal and a molecular sieve; a second region for oxidising carbon monoxide (CO) and/or hydrocarbons (HCs), wherein the second region comprises palladium (Pd), gold (Au) and a support material; and a substrate having an inlet end and an outlet end.

US patent publication no. 2015/202572 A1 discloses an oxidation catalyst for treating an exhaust gas from a diesel engine and an exhaust system comprising the oxidation catalyst. The oxidation catalyst comprises: a first washcoat region for oxidising carbon monoxide (CO) and hydrocarbons (HCs), wherein the first washcoat region comprises a first platinum group metal (PGM) and a first support material; a second washcoat region for oxidising nitric oxide (NO), wherein the second washcoat region comprises platinum (Pt), manganese (Mn) and a second support material; and a substrate having an inlet end and an outlet end; wherein the second washcoat region is arranged to contact the exhaust gas at the outlet end of the substrate and after contact of the exhaust gas with the first washcoat region.

Platinum group metals as commodities are relatively rare, naturally occurring metallic chemical elements of high economic value relative to industrial base metals, such as copper. Shortly before the filing date of this specification, the spot price on the London Metal Exchange for copper was US$8,750 per tonne, whereas the London Bullion Market Association spot price for platinum was US$1,191 per ounce, equivalent to US$42,011,334 per tonne (there are 35,274 ounces in a metric tonne). However, the corresponding spot price for palladium was US$2,752 per ounce. That is, by weight, palladium is presently over twice the cost of platinum. There is therefore a general interest in reducing the quantity of palladium in diesel oxidation catalysts relative to platinum and, if possible, to reduce the quantity of platinum group metals in diesel oxidation catalysts by suitable promotion with less costly metallic elements.

### SUMMARY

According to a first aspect, the invention provides a layered diesel oxidation catalyst for treatment of exhaust gas emissions from a diesel engine comprising: a flow-through monolith substrate having a honeycomb structure and comprising a front zone and a rear zone, wherein the front zone of the substrate comprises a combination of layers, one on top of another and comprising two or more of layers A, B and C; and the rear zone comprises Layer D, wherein:
i. Layer A comprises platinum, palladium, or combinations thereof on a molecular sieve;
ii. Layer B comprises 1) platinum, palladium, or combinations thereof on a refractory metal oxide support; and 2) an alkaline earth metal, preferably barium, strontium or combinations thereof;
iii. Layer C comprises 1) a platinum group metal, which is platinum or a combination of both platinum and palladium on a refractory metal oxide support; and 2) a promoter metal, which is bismuth, wherein layer C is a bottom layer coated on the substrate; and
iv. layer D comprises 1) platinum or a combination of both platinum and palladium on a refractory metal oxide support; and 2) manganese (Mn),
wherein the combination of layers in the front zone comprises: (i) Layer A and Layer C; (ii) Layer B and Layer C; or (iii) Layer A, Layer B, and Layer C.

The layered diesel oxidation catalysts according to the invention are for treating exhaust gas emissions from a diesel engine and for this reason it preferably does not comprise rhodium, which is typically included in catalyst components e.g. three-way catalysts for treating gasoline exhaust gas emissions.

Further, the layered diesel oxidation catalysts according to the invention do not comprise oxides of cerium, either as dopants to refractory metal oxide components, such as alumina; or as refractory metal oxide support materials as such, e.g., particulate ceria (CeO₂) or particulate cerium oxide-containing mixed oxides, such as cerium-zirconium oxides, also known as oxygen storage components (OSCs).

In some aspects, Layer B comprises platinum and palladium in a weight ratio of 0.5: 1 to 3:1; preferably in a weight ratio of 2:1.

In Layer D, the support can comprise a molecular sieve or a refractory metal oxide; preferably a refractory metal oxide; most preferably alumina, silica-alumina, or combinations thereof.

According to the invention, Layer C is a bottom layer coated on the substrate. Layer B can be coated over at least a portion of a bottom layer but is preferably substantially the same axial length as the bottom layer. Layer A can be a top layer, coated over at least a portion of a middle layer and/or a bottom layer, but is preferably substantially the same axial length as the middle layer and/or the bottom layer.

Layer A and/or Layer C are preferably substantially free of barium. Alumina of Layer B and/or Layer C preferably comprises silica-alumina (see hereinbelow for a definition of "silica-alumina").

Generally, Layer A is formulated to oxidize hydrocarbons. The molecular sieve of Layer A may comprise, for example, MFI, FAU, or BEA; preferably BEA. The platinum group metal of Layer A comprises platinum, palladium, or combinations thereof.

Generally, Layer B is formulated to oxidize CO and hydrocarbon. The platinum group metal of Layer B comprises platinum, palladium, or combinations thereof. The refractory metal oxide of Layer B may comprise alumina, zirconia, silica, titania, silica-alumina, zirconia-alumina, titania-alumina, lanthana-alumina, lanthana-zirconia-alumina, baria-alumina, baria-lanthana-alumina, baria-lanthana-neodymia-alumina, zirconia-silica, titania-silica, zirconia-titania, or combinations thereof; preferably alumina, silica-alumina, or combinations thereof (see hereinbelow for a definition of "silica-alumina").

The alkaline earth metal of Layer B may comprise beryllium, magnesium, calcium, strontium, barium, radium, or combinations thereof; preferably strontium, barium, or combinations thereof; or most preferably barium. Layer B can comprise platinum and palladium in a weight ratio of 10:1 ≥ 0.5: 1, such as 10:1 ≥ 1:1, 6:1 ≥ 1.5: 1, 0.5:1 to 4:1 or 0.5:1 to 3:1; preferably in a weight ratio of 2:1.

The loading of alkaline earth metal in Layer B, particularly barium, is typically 1.06 to 8.83 g/L (30 to 250 g ft⁻³), such as 1.77 to 7.06 g/L (50 to 200 g ft⁻³).

Layer B can also comprise a molecular sieve, particularly where Layer B is one of only two layers in the front zone.

Generally, Layer C is formulated to oxidize CO. The platinum group metal of Layer C is platinum or a combination of both platinum and palladium on a refractory metal oxide support.

Where the promoter metal in Layer C is bismuth the platinum to palladium weight ratio is preferably 1:0 ≥ 15:1, because the results disclosed in Applicant's WO2017/064498A1 show that higher Pt:Pd weight ratios - or Pt only - are beneficial for CO and HC oxidation where bismuth is promoter (see Examples 3 to 6 and Table 3 and associated description in WO '498A1). Additionally, as can be seen in Examples hereinbelow (see Tables 6 and 7 and associated description), where zeolite is present in the bismuth-containing layer, CO oxidation is negatively affected and N₂O generation can increase. Accordingly, Layer C is preferably substantially free of molecular sieve.

Bismuth loading in a bismuth containing Layer C is preferably 5:1 to 1:2, more preferably 4:1 to 3:5 (e.g., 5:2 to 3:5), such as 2:1 to 1:1. It has been found that the relative proportion of PGM, particularly Pt, to bismuth can affect the oxidative activity of the catalytic material toward hydrocarbons. Additionally, or alternatively, it is preferred that the bismuth-containing Layer C comprises a total loading of bismuth of 0.353 to 3.53 g/L (10 to 100 g ft⁻³), more preferably 0.883 to 2.65 g/L (25 to 75 g ft⁻³). This is because higher bismuth loadings can negatively impact CO and HC oxidation activity (see Examples 7 to 10 and Table 3 and associated description in WO '498A1).

A further benefit of bismuth-containing oxidation catalysts is that they are more cost effective in the current climate where palladium is extremely expensive. That is, bismuth diesel oxidation catalysts are active at low palladium content. For example, in the Examples below, bismuth containing catalysts including Pt-only Layer D are illustrated having a Pt:Pd weight ratio of 13:1 and 7.1:1. For this reason, it is particularly preferred that the ratio by weight of the total platinum to palladium in the diesel oxidation as a whole is 20:1 to 2:1, particularly 20:1 to 5:1, such as 20:1 to 7:1, more preferably 17.5:1 to 2.5:1, particularly 15:1 to 5:1, and still more preferably 12.5:1 to 7.5:1.

The molecular sieve of Layer A and/or Layer B preferably comprises MFI, FAU, or BEA; preferably BEA.

The total PGM loading in the catalyst as a whole is typically 1.77 to 10.59 g/L (50 to 300 g ft⁻³), such as 2.12 to 8.83 g/L (60 to 250 g ft⁻³) (e.g. 2.65 to 6.18 g/L (75 to 175 g ft⁻³)), more preferably 3.00 to 5.65 g/L (85 to 160 g ft⁻³).

The total Pt:Pd weight ratio in the catalyst as a whole is typically >1:1, particularly ≥ 2:1 e.g. 20:1 ≥ 2:1, such as 10:1 ≥ 3:1.

The layered diesel oxidation catalyst according to any preceding claim, wherein the substrate has an axial length, and the front zone is from 20 to 80% of the axial length of the substrate and the rear zone is from 80 to 20% of the axial length of the substrate. The axial length of the front zone and the rear zone is generally 100%, however during manufacturing it is typical that a small, unintended overlap is obtained as the front or rear layer coated last overlaps the layer coated first. Small, unintended overlaps are typically <10% of the substrate axial length, such as <9%, <8%, <7%, <6%, <5%, <4%, <3%, <2% or <1%. The front zone can have an axial length of 30 to 65 % (so the rear zone 65 to 30%), such as 25 to 45 % of the length of the substrate, still more preferably 25 to 65 % (e.g., 35 to 50 %). Preferably, the front zone has a substrate axial length of 50% and the rear zone has a substrate axial length of 50%.

Preferably all Layers on the front zone have substantially the same axial length.

The refractory metal oxide of Layer C may comprise alumina, zirconia, silica, titania, silica-alumina, zirconia-alumina, titania-alumina, lanthana-alumina, lanthana-zirconia-alumina, baria-alumina, baria-lanthana-alumina, baria-lanthana-neodymia-alumina, zirconia-silica, titania-silica, zirconia-titania, or combinations thereof; preferably alumina, silica-alumina, or combinations thereof.

The platinum group metal in Layer D may comprise, for example, platinum. The support may comprise a refractory metal oxide; preferably a refractory metal oxide; most preferably alumina, silica-alumina, or combinations thereof.

The inventors have also found that excellent activity toward the oxidation of nitric oxide (NO) in an exhaust gas from a diesel engine can be obtained when using Layer D as defined, particularly where the refractory metal oxide is silica-alumina. Platinum is expensive and is often included in oxidation catalysts in relatively large amounts for, amongst other things, its oxidation activity toward NO. The inclusion of manganese (Mn) in combination with platinum (Pt) may result in an improvement in NO oxidation activity or allow the use of a reduced amount of Pt to achieve a given level of NO oxidation.

According to a second aspect, the present invention provides a system for treatment of a diesel engine exhaust stream including hydrocarbons, carbon monoxide, and other exhaust gas components, may include: (a) an exhaust gas conduit in fluid communication with the diesel engine via an exhaust gas manifold; (b) the layered diesel oxidation catalyst of any of the preceding claims, wherein the front zone is oriented to the upstream side; and (c) one or more of the following in fluid communication with the layered diesel oxidation catalyst: a soot filter, a selective catalytic reduction (SCR) catalyst or a SCR catalysed filter, and a NOx storage and reduction catalyst. Preferably, element (c) comprises an SCR catalyst or a SCR filter catalyst located downstream from the layered diesel oxidation catalyst.

As described herein, by "silica-alumina" is meant alumina doped with silica. Alumina doped with a dopant can be prepared using methods known in the art or, for example, by a method described in US 5,045,519.

In the alumina doped with silica, the alumina is doped with silica in a total amount of 2.5 to 30 % by weight (i.e. % by weight of the alumina), particularly 3.5 to 25 % by weight silica, such as 4.5 to 20 % by weight silica, 5 to 20 % by weight silica or preferably 3.5 to 15 % by weight silica.

### BRIEF DESCRIPTION OF THE DRAWINGS

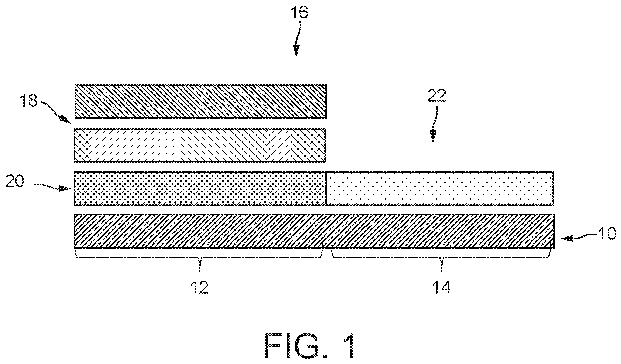

Figure 1 shows a diesel oxidation catalyst configuration according to the present invention. In an alternative embodiment (not shown in the Figures) the front zone consists of two superimposed layers and the rear zone one layer supported on a substrate.

### DETAILED DESCRIPTION

Catalysts, methods, and systems of aspects of the present invention relate to a layered diesel oxidation catalyst (DOC) which is formulated and configured to provide surprising improvements to HC and CO light-off and NO oxidation. Diesel oxidation catalysts of the present invention include a combination of layers arranged in zones, where each layer and/or zone is formulated to provide a different catalytic activity; when the layers and/or zone are combined, they may work together to provide a layered DOC with a broader active temperature window for catalysing the desired reactions.

### General DOC

Generally, DOC catalysts may include a metal disposed or supported on a support. Formulations of each layer may be described in further detail in subsequent sections.

Support materials for use in the present invention may comprise, or consist essentially of, a refractory metal oxide. Refractory metal oxides suitable for use as a catalytic component of an oxidation catalyst for a diesel engine are well known in the art.

The refractory metal oxide is typically selected from the group consisting of alumina, silica, titania or zirconia. For example, the refractory metal oxide may be selected from the group consisting of alumina, silica, titania, zirconia, silica-alumina, titania-alumina, zirconia-alumina, titania-silica, zirconia-silica, zirconia-titania and alumina-magnesium oxide.

The refractory metal oxide may optionally be doped (e.g. with a dopant). The dopant may be selected from the group consisting of zirconium (Zr), titanium (Ti), silicon (Si), yttrium (Y), lanthanum (La), praseodymium (Pr), samarium (Sm), neodymium (Nd) and an oxide thereof. The inclusion of a dopant can thermally stabilize the refractory metal oxide or support material. It is to be understood that any reference to "doped" in this context refers to a material where the bulk or host lattice of the refractory metal oxide is substitution doped or interstitially doped with a dopant. In some instances, small amounts of the dopant may be present at a surface of the refractory metal oxide. However, most of the dopant will generally be present in the body of the refractory metal oxide. The chemical and/or physical properties of a refractory metal oxide are often affected by the presence of a dopant.

When the refractory metal oxide is doped, the total amount of dopant may be 0.25 to 5% by weight, preferably 0.5 to 3% by weight (e.g. 1% by weight) (the definition of silica-alumina is separate and distinct from the above definitions, for which definition of silica-alumina see hereinabove and below).

In some aspects, a preferred refractory metal oxide comprises, or consists essentially of, alumina doped with a dopant. The alumina may be doped with a dopant comprising silicon (Si), magnesium (Mg), barium (Ba), lanthanum (La), titanium (Ti), or zirconium (Zr) or a combination of two or more thereof. The dopant may comprise, or consist essentially of, an oxide of silicon, an oxide of magnesium, an oxide of barium, an oxide of lanthanum, an oxide of cerium, an oxide of titanium or an oxide of zirconium. Preferably, the dopant comprises, or consists essentially of, silicon, magnesium, barium or an oxide thereof, particularly silicon, or cerium, or an oxide thereof. More preferably, the dopant comprises, or consists essentially of, silicon, magnesium, barium, or an oxide thereof; particularly silicon, magnesium, or an oxide thereof; especially silicon or an oxide thereof.

Examples of alumina doped with a dopant include alumina doped with silica, alumina doped with magnesium oxide, alumina doped with barium or barium oxide, alumina doped with lanthanum oxide, or alumina doped with ceria, particularly alumina doped with silica or alumina doped with lanthanum oxide. It is preferred that the alumina doped with a dopant is alumina doped with silica, alumina doped with barium or barium oxide, or alumina doped with magnesium oxide. More preferably, the alumina doped with a dopant is alumina doped with silica or alumina doped with magnesium oxide. Even more preferably, the alumina doped with a dopant is alumina doped with silica. Alumina doped with a dopant can be prepared using methods known in the art or, for example, by a method described in U.S. Pat. No. 5,045,519.

When the alumina is alumina doped with silica, then the alumina may be doped with silica in a total amount of 0.5 to 45% by weight (i.e. % by weight of the alumina), preferably 1 to 40% by weight, more preferably 1.5 to 30% by weight (e.g. 1.5 to 10% by weight), particularly 2.5 to 25% by weight, more particularly 3.5 to 20% by weight (e.g. 5 to 20 by weight), even more preferably 4.5 to 15% by weight.

Alternatively, or additionally, the refractory metal oxide may comprise, or consist essentially of, an alkaline earth metal aluminate. The term "alkaline earth metal aluminate" generally refers to a compound of the formula MAl₂O₄ where "M" represents the alkaline earth metal, such as Mg, Ca, Sr or Ba. Such compounds generally comprise a spinel structure. These compounds can be prepared using conventional methods known in the art or by using a method described in EP 0945165, U.S. Pat. Nos. 6,217,837 or 6,517,795.

Typically, the alkaline earth metal aluminate is magnesium aluminate (MgAl₂O₄), calcium aluminate (CaAl₂O₄), strontium aluminate (SrAl₂O₄), barium aluminate (BaAl₂O₄), or a mixture of two or more thereof. Preferably, the alkaline earth metal aluminate is magnesium aluminate (MgAl₂O₄).

In general, when the refractory metal oxide comprises or consists essentially of a mixed or composite oxide of alumina (e.g. silica-alumina or alumina-magnesium oxide), then preferably the mixed or composite oxide of alumina comprises at least 50 to 99% by weight of alumina, more preferably 70 to 95% by weight of alumina, even more preferably 75 to 90% by weight of alumina.

In some aspects, a support may comprise a molecular sieve. The molecular sieve may have an aluminosilicate framework (e.g. Aluminosilicate zeolite) or a silicoaluminophosphate framework (e.g. SAPO).

When the molecular sieve has an aluminosilicate framework (e.g. the molecular sieve is a zeolite), then typically the molecular sieve has a silica to alumina molar ratio (SAR) of from 5 to 200 (e.g. 10 to 200); 10 to 100 (e.g. 10 to 30 or 20 to 80); 10 to 50; 10 to 30; 12 to 40; 15 to 30; 5 to 20; 5 to 15; 8 to 15; 8 to 13; 10 to 15; 10 to 20; 10 to 40; 10 to 60; 10 to 80; 10 to 100; 10 to 150; < 30; < 20; < 15; or < 13. A suitable molecular sieve can be a SAR of > 200; > 600; or > 1200. For example, the molecular sieve can have a SAR of from 1500 to 2100.

The molecular sieve can be microporous. A microporous molecular sieve has pores with a diameter of less than 2 nm (e.g. in accordance with the IUPAC definition of "microporous" [see Pure & Appl. Chem., 66(8), (1994), 1739-1758].

Alternatively, the molecular sieve can be mesoporous. A mesoporous molecular sieve has pores with a diameter between 2 and 50 nm (e.g. in accordance with the IUPAC definition of "mesoporous").

The molecular sieve may be a small pore molecular sieve (e.g. a molecular sieve having a maximum ring size of eight tetrahedral atoms), a medium pore molecular sieve (e.g. a molecular sieve having a maximum ring size often tetrahedral atoms) or a large pore molecular sieve (e.g. a molecular sieve having a maximum ring size of twelve tetrahedral atoms) or a combination of two or more thereof.

When the molecular sieve is a small pore molecular sieve, then the small pore molecular sieve may have a framework structure represented by a Framework Type Code (FTC) selected from the group consisting of ACO, AEI, AEN, AFN, AFT, AFX, ANA, APC, APD, ATT, CDO, CHA, DDR, DFT, EAB, EDI, EPI, ERI, GIS, GOO, IHW, ITE, ITW, LEV, LTA, KFI, MER, MON, NSI, OWE, PAU, PHI, RHO, RTH, SAT, SAV, SFW, SIV, THO, TSC, UEI, UFI, VNI, YUG and ZON, or a mixture and/or combination and/or an intergrowth of two or more thereof. The small pore molecular sieve can have a framework structure selected from the group consisting of CHA, LEV, AEI, AFX, ERI, LTA, SFW, KFI, DDR and ITE. The small pore molecular sieve can have a framework structure selected from the group consisting of CHA, AEI, and AFX. The small pore molecular sieve can have a framework structure selected from the group consisting of CHA and AEI. The small pore molecular sieve may have a CHA framework structure. The small pore molecular sieve may have an AEI framework structure.

When the molecular sieve is a medium pore molecular sieve, then the medium pore molecular sieve may have a framework structure represented by a Framework Type Code (FTC) selected from the group consisting of AEL, AFO, AHT, BOF, BOZ, CGF, CGS, CHI, DAC, EUO, FER, HEU, IMF, ITH, ITR, JRY, JSR, JST, LAU, LOV, MEL, MFI, MFS, MRE, MTT, MVY, MWW, NAB, NAT, NES, OBW, PAR, PCR, PON, PUN, RRO, RSN, SFF, SFG, STF, STI, STT, STW, SVR, SZR, TER, TON, TUN, UOS, VSV, WEI and WEN, or a mixture and/or an intergrowth of two or more thereof. The medium pore molecular sieve can have a framework structure selected from the group consisting of FER, MEL, MFI, and STT. The medium pore molecular sieve preferably has a framework structure selected from the group consisting of FER and MFI, particularly MFI. When the medium pore molecular sieve is a zeolite and has an FER or MFI framework, then the zeolite may be ferrierite, silicalite or ZSM-5.

When the molecular sieve is a large pore molecular sieve, then the large pore molecular sieve may have a framework structure represented by a Framework Type Code (FTC) selected from the group consisting of AFI, AFR, AFS, AFY, ASV, ATO, ATS, BEA, BEC, BOG, BPH, BSV, CAN, CON, CZP, DFO, EMT, EON, EZT, FAU, GME, GON, IFR, ISV, ITG, IWR, IWS, IWV, IWW, JSR, LTF, LTL, MAZ, MEI, MOR, MOZ, MSE, MTW, NPO, OFF, OKO, OSI, RON, RWY, SAF, SAO, SBE, SBS, SBT, SEW, SFE, SFO, SFS, SFV, SOF, SOS, STO, SSF, SSY, USI, UWY, and VET, or a mixture and/or an intergrowth of two or more thereof. The large pore molecular sieve has a framework structure selected from the group consisting of AFI, BEA, MAZ, MOR, and OFF. The large pore molecular sieve preferably has a framework structure selected from the group consisting of BEA, MOR and FAU. When the large pore molecular sieve is a zeolite and has a BEA, FAU or MOR framework, then the zeolite may be a beta zeolite, faujasite, zeolite Y, zeolite X or mordenite.

A suitable molecular sieve includes a combination of small and large pore frameworks. A suitable molecular sieve of this type includes ZSM-34 (ERI + OFF).

A support material typically has a platinum group metal disposed or supported thereon.

Most preferably the molecular sieve, zeolite or silicoaluminophosphate of the layered diesel oxidation catalyst of the invention is substantially free of copper. Preferably, the layered diesel oxidation catalyst of the invention is substantially free of copper.

### Layer Formulations

A layered DOC may include layers which are each formulated to provide a different catalytic activity, such that when they are combined, they may work together to provide a layered DOC with a broader active temperature window for catalysing the desired reactions. The layered DOC of the invention may include all or some combination of the layers described below.

### Layer A - Hydrocarbon Oxidation

A layered DOC of the present invention may include a Layer A comprising platinum, palladium, or combinations thereof disposed or supported on a molecular sieve. Layer A may be formulated to primarily oxidize hydrocarbon.

Layer A may include a platinum group metal in an amount of 0.2 wt% to 6 wt%; or preferably 0.5 wt% to 3 wt%.

The molecular sieve of Layer A comprises MFI, FAU, BEA, or combinations thereof; or most preferably BEA.

Layer A can comprise palladium on a BEA molecular sieve. Layer A can be free of, or essentially or substantially free of, an alkaline earth metal, e.g. Layer A can be free of, or essentially or substantially free of, barium.

### Layer B - CO and Hydrocarbon Oxidation

A layered DOC of the present invention may include a Layer B comprising 1) platinum, palladium, or combinations thereof on a refractory metal oxide support; and 2) an alkaline earth metal. Layer B may be formulated to primarily oxidize CO and hydrocarbon.

Layer B can comprise platinum and palladium in a weight ratio of 0.5:1 to 4: 1; preferably in a weight ratio of 2:1.

The refractory metal oxide of Layer B can comprise alumina, zirconia, silica, titania, silica-alumina, zirconia-alumina, titania-alumina, lanthana-alumina, lanthana-zirconia-alumina, baria-alumina, baria-lanthana-alumina, baria-lanthana-neodymia-alumina, zirconia-silica, titania-silica, zirconia-titania, or combinations thereof; preferably alumina, silica-alumina, or combinations thereof.

The alkaline earth metal of Layer B comprises beryllium, magnesium, calcium, strontium, barium, radium, or combinations thereof; preferably magnesium, barium, or combinations thereof; or most preferably barium. Layer B may include an alkaline earth metal in an amount of 0.5 wt% to 12 wt%; or preferably 1 wt% to 6 wt%.

Layer B can comprise 1) platinum and palladium on alumina; and 2) barium.

### Layer C - CO Oxidation

According to the invention, the layered DOC of the present invention includes a Layer C comprising 1) a platinum group metal, which is platinum or a combination of both platinum and palladium on a refractory metal oxide support; and 2) a promoter metal, which is bismuth. Layer C may be formulated to primarily oxidize CO.

The refractory metal oxide of Layer C can comprise alumina, zirconia, silica, titania, silica-alumina, zirconia-alumina, titania-alumina, lanthana-alumina, lanthana-zirconia-alumina, baria-alumina, baria-lanthana-alumina, baria-lanthana-neodymia-alumina, zirconia-silica, titania-silica, zirconia-titania, or combinations thereof; preferably alumina, silica-alumina, or combinations thereof.

Layer C may include the promoter metal in an amount of 0.5 wt% to 16 wt%; or preferably 1 wt% to 8 wt%.

Layer C can comprise 1) platinum on alumina, such as silica-alumina; and 2) bismuth; or 1) platinum on alumina, such as silica-alumina; and 2) manganese; or 1) platinum on alumina, such as silica-alumina; and 2) bismuth and manganese. Layer C is preferably free of, or essentially or substantially free of, an alkaline earth metal, e.g. Layer C is free of, or essentially or substantially free of, barium.

### Layer D - NO Oxidation

According to the invention, the layered DOC of the present invention includes a Layer D comprising 1) platinum or a combination of both platinum and palladium on a refractory metal oxide support; and 2) manganese. Layer D may be formulated to primarily oxidize NO.

The support of Layer D comprises a molecular sieve or a refractory metal oxide; preferably a refractory metal oxide; most preferably alumina, silica-alumina, or combinations thereof.

Layer D may include manganese in an amount of 0.5 wt% to 16 wt%; or preferably 1 wt% to 8 wt%.

Layer D can comprise 1) platinum on alumina, such as silica-alumina; and 2) Mn.

### Substrate

The layered DOC of the present invention comprises a substrate. The substrate is a flow-through substrate. One or more diesel oxidation catalyst composition is disposed or supported on the substrate in layers (i.e. the diesel oxidation catalyst is applied onto the substrate by a washcoating method). The diesel oxidation catalyst may coat the substrate entirely or partially, as desired. In some embodiments, the extruded catalyst is coated with one or more additional catalysts, which could include, for example, a diesel oxidation catalyst.

The substrate may comprise the diesel oxidation catalyst in a total loading concentration of30.5 to 518.7 g/L (0.5 to 8.5 g in³); 61.0 to 457.7 g/L (1 to 7.5 g in³); 91.5 to 396.6 g/L (1.5 to 6.5 g in³); 244.1 to 335.6 g/L (4 to 5.5 g in³); 30.5 to 244.1 g/L (0.5 to 4.0 g in³); 61.0 to 183 g/L (1.0 to 3.0 g in³); or 73.2 to 152.6 g/L (1.2 to 2.5 g/in³).

The flow-through substrate is a substrate that is capable of supporting catalyst components. The substrate is preferably a ceramic substrate or a metallic substrate. The ceramic substrate may include any suitable refractory material, e.g., alumina, silica, titania, ceria, zirconia, magnesia, zeolites, silicon nitride, silicon carbide, zirconium silicates, magnesium silicates, aluminosilicates, metallo-aluminosilicates (such as cordierite and spodumene), or a mixture or mixed oxide of any two or more thereof. Cordierite, a magnesium aluminosilicate, and silicon carbide are particularly preferred.

The metallic substrates may be made of any suitable metal, and in particular heat-resistant metals and metal alloys such as titanium and stainless steel as well as ferritic alloys containing iron, nickel, chromium, and/or aluminium in addition to other trace metals. In a particularly preferred metallic substrate suitable for Euro 7 emission standards, the metallic substrate comprises a metal foil substrate and an electrically heatable disc including electrical contacts therefore. Both the electrically heatable disc and the metal foil substrate are housed within a metallic cylindrical mantel. The electrically heatable disc can be oriented to the upstream side or the downstream side, as desired.

The flow-through substrate is preferably a flow-through monolith having a honeycomb structure with many small, parallel thin-walled channels running axially through the substrate and extending throughout from an inlet or an outlet of the substrate. The channel cross-section of the substrate may be any shape, but is preferably square, sinusoidal, triangular, rectangular, hexagonal, trapezoidal, circular, or oval. The flow-through substrate may also be high porosity which allows the catalyst to penetrate into the substrate walls.

The filter substrate of the selective catalytic reduction filter catalyst (see hereinbelow) is preferably a wall-flow monolith filter. The channels of a wall-flow filter are alternately blocked, which allow the exhaust gas stream to enter a channel from the inlet, then flow through the channel walls, and exit the filter from a different channel leading to the outlet. Particulates in the exhaust gas stream are thus trapped in the filter.

The catalyst composition may be added to the flow-through or filter substrate by any known means, such as a washcoat procedure.

When the catalyst article is selective catalytic reduction filter, then the filtering substrate may preferably be a wall flow filter substrate monolith. The wall flow filter substrate monolith (e.g. of the SCR-DPF) typically has a cell density of 9.3 to 62.0 cells per square centimetre (60 to 400 cells per square inch (cpsi)). It is preferred that the wall flow filter substrate monolith has a cell density of 15.5 to 54.25 cells/cm² (100 to 350 cpsi), more preferably 31.0 to 46.5 cells/cm² (200 to 300 cpsi).

The wall flow filter substrate monolith may have a wall thickness (e.g. average internal wall thickness) of 0.20 to 0.50 mm, preferably 0.25 to 0.35 mm (e.g. 0.30 mm).

Generally, the uncoated wall flow filter substrate monolith has a porosity of from 40 to 80 %, preferably 45 to 75 %, and more preferably 50 to 70 %.

The uncoated wall flow filter substrate monolith typically has a mean pore size of at least 5 µm. It is preferred that the mean pore size is from 8 to 40 µm, such as 10 to 35 µm, more preferably 15 to 30 µm.

The wall flow filter substrate may have a symmetric cell design or an asymmetric cell design.

In general, for a selective catalytic reduction filter, the catalyst composition is disposed within the wall of the wall-flow filter substrate monolith. Additionally, the catalyst composition may be disposed on the walls of the inlet channels and/or on the walls of the outlet channels.

Catalyst compositions of embodiments of the present invention may be coated on a suitable monolith substrate. Washcoat compositions containing the catalyst compositions of the present invention for coating onto the monolith substrate or for manufacturing extruded type substrate monoliths can comprise a binder selected from the group consisting of alumina, silica, (non-zeolite) silica-alumina, naturally occurring clays, TiO₂, ZrO₂, and SnO₂. In general, catalytic articles comprising the catalyst composition in a desired loading level may be prepared by washcoating, extrusion, or other methods known in the art.

### Configurations

Diesel oxidation catalysts of the present invention include a combination of layers, and zones, where each layer and/or zone is formulated to provide a different catalytic activity; when the layers and zones are combined, they may work together to provide a layered DOC with a broader active temperature window for catalysing the desired reactions.

In embodiments, Layer A can be a top layer, coated over at least a portion of a middle layer and/or a bottom layer. Alternatively, Layer A can be a middle layer coated over at least a portion of the Layer C bottom layer.

In embodiments, a diesel oxidation catalyst according to the invention includes Layer B. Layer B can be a top layer, coated over at least a portion of a middle layer and/or a bottom layer. Alternatively, Layer B can be a middle layer coated over at least a portion of the Layer C bottom layer.

In an embodiment, the diesel oxidation catalyst includes Layer A, Layer B, and Layer C. In a particular embodiment, a diesel oxidation catalyst includes Layer A, Layer B, and Layer C, where Layer A is a top layer, Layer B is a middle layer, and Layer C is a bottom layer. In another embodiment, a diesel oxidation catalyst includes Layer A and Layer C.

The substrate of the layered diesel oxidation catalyst according to the invention comprises a front zone and a rear zone. In some embodiments, the front zone includes two layers. In other embodiments, the front zone includes all three of Layers A, B and C. In some embodiments, the front zone includes Layer A and Layer C.

A particular embodiment is shown in **Figure 1****,** wherein a layered diesel oxidation catalyst includes substrate **10** having front zone **12** and rear zone **14,** where front zone **12** includes Layer A as top layer **16,** Layer B as middle layer **18,** and Layer C as bottom layer **20,** and wherein a rear zone **14** includes Layer D **22.**

### Methods and Systems

Methods of the present invention relate to treating a gaseous stream of a diesel engine, where the exhaust stream includes hydrocarbons, carbon monoxide, and other exhaust gas components, in the presence of the diesel oxidation catalyst described herein. In this way, the layered catalysts of the present invention may function as diesel oxidation catalysts.

Layer A may primarily oxidize hydrocarbons in the exhaust gas, Layer B may oxidize both CO and hydrocarbons, and Layer C may primarily oxidize CO. Layer D may primarily oxidize NO. With some or both of Layers A and B in a front zone with layer C as a bottom layer and Layer D in a rear zone, CO and hydrocarbons may be oxidized first and subsequently NO can be oxidized, creating NO₂. NO₂ may be useful for downstream catalysts such as a selective catalytic reduction catalyst.

A layered DOC of the present invention will generally be effective through a temperature range of 100°C to 500°C.

In some aspects, a system of the present invention may be useful for treatment of a diesel engine exhaust stream including hydrocarbons, carbon monoxide, and other exhaust gas components, the emission treatment system comprising (a) an exhaust gas conduit in fluid communication with the diesel engine via an exhaust gas manifold; (b) a layered diesel oxidation catalyst as described herein, wherein the front zone is oriented to the upstream side; and (c) one or more of the following in fluid communication with the layered diesel oxidation catalyst: a soot filter, a selective catalytic reduction (SCR) catalyst, and a NOx storage and reduction catalyst. Preferably, element (c) comprises an SCR catalyst located downstream from the layered diesel oxidation catalyst.

### Terms

In the present disclosure, the singular forms "a," "an," and "the" include the plural reference, and reference to a particular numerical value includes at least that particular value, unless the context clearly indicates otherwise. Thus, for example, a reference to "a material" is a reference to at least one of such materials and equivalents thereof known to those skilled in the art, and so forth.

It is to be appreciated that certain features of the invention which are, for clarity, described herein in the context of separate embodiments, may also be provided in combination in a single embodiment. That is, unless obviously incompatible or specifically excluded, each individual embodiment is deemed to be combinable with any other embodiment(s) and such a combination is considered to be another embodiment. Conversely, various features of the invention that are, for brevity, described in the context of a single embodiment, may also be provided separately or in any sub-combination. Finally, while an embodiment may be described as part of a series of steps or part of a more general structure, each said step may also be considered an independent embodiment in itself, combinable with others.

The transitional terms "comprising," "consisting essentially of," and "consisting" are intended to connote their generally accepted meanings in the patent vernacular; that is, (i) "comprising," which is synonymous with "including," "containing," or "characterized by," is inclusive or open-ended and does not exclude additional, unrecited elements or method steps; (ii) "consisting of" excludes any element, step, or ingredient not specified in the claim; and (iii) "consisting essentially of" limits the scope of a claim to the specified materials or steps "and those that do not materially affect the basic and novel characteristic(s)" of the claimed invention. Embodiments described in terms of the phrase "comprising" (or its equivalents), also provide, as embodiments, those which are independently described in terms of "consisting of" and "consisting essentially" of. For those embodiments provided in terms of "consisting essentially of," the basic and novel characteristic(s) is the combination of a Layer C which is substantially free from molecular sieve and comprising platinum or platinum and palladium and a manganese and/or bismuth promoter coated in a bottom layer of a front zone of the substrate; a Layer B coated on top of the bottom Layer C and comprising a molecular sieve and platinum, palladium or both platinum and palladium and optionally an alkaline earth metal; and a rear zone of Layer D comprising platinum and manganese for the oxidation of CO, unburned hydrocarbons and oxides of nitrogen. Materials or steps which do not detract from such operability would be considered within the scope of such embodiments.

When a list is presented, unless stated otherwise, it is to be understood that each individual element of that list, and every combination of that list, is a separate embodiment. For example, a list of embodiments presented as "A, B, or C" is to be interpreted as including the embodiments, "A", "B", "C", "A or B," "A or C," "B or C," or "A, B, or C."

Throughout this specification, words are to be afforded their normal meaning, as would be understood by those skilled in the relevant art. However, so as to avoid misunderstanding, the meanings of certain terms will be specifically defined or clarified.

"Optional" or "optionally" means that the subsequently described circumstance may or may not occur, so that the description includes instances where the circumstance occurs and instances where it does not. Similarly, embodiments which refer to a component or step as being "optionally present," those embodiments include separate independent embodiments in which the step or component is present or absent. The description "optional" allows for, but does not require, the optional condition to occur.

### EXAMPLES

The "established coating techniques" used to coat all catalysts inn these Examples was the method and apparatus disclosed in WO 99/47260 A1, i.e. a method of coating a monolithic support, comprising the steps of (a) locating a containment means on top of a support, (b) dosing a predetermined quantity of a liquid component into said containment means, either in the order (a) then (b) or (b) then (a), and (c) by applying vacuum, drawing the entirety of said quantity of liquid component into at least a portion of the support, and retaining substantially all of said quantity within the support, without recycle.
The total PGM loading for each catalyst of Examples 1 to 4 inclusive was 5.30 g/L (150 g/ft³).

### Reference Example 1 - Zone-coated Single Layer Inlet Catalyst

A first slurry was prepared by adding silica-alumina powder (alumina doped with 5wt% silica) in water and milling to a d₉₀ < 20 micron. Ba acetate and soluble platinum and palladium salts were added to the slurry followed by beta zeolite such that the slurry comprised 77% silica doped alumina and 23% zeolite by mass. The mixture was stirred to homogenise. The resulting washcoat was applied to an axial length of 50% of the inlet channels of a 1.4 litre volume cordierite flow-through (honeycomb) monolith substrate with 62 cells per square centimetre (400 cells per square inch) using the established coating techniques. The coated part was dried. The inlet coating had a total PGM loading of 42.4 g/L (120 g ft⁻³) and a Pt:Pd weight ratio of 2:1 and the barium loading was 4.41 g/L (125 g ft⁻³).

A second slurry was prepared by taking silica-alumina powder (alumina doped with 5wt% silica) and milling to a d₉₀ < 20 micron. Soluble platinum salt was added followed by manganese nitrate. The slurry was then stirred to homogenise. The resulting washcoat was applied to the outlet channels to an axial length of 50% of the flow-through monolith substrate using the established coating techniques. The part coated with both the first and second slurry washcoat coatings was dried and calcined at 500°C. The outlet coating had a total Pt loading of 2.12 g/L (60 g ft⁻³) and manganese loading of 3.53 g/L (100 g ft⁻³).

The total PGM loading of the substrate as a whole was 3.18 g/L (90 g ft⁻³) at a Pt:Pd weight ratio of 3.6:1.

### Example 2 - Zone-coated Manganese-containing Three Layer Inlet Catalyst (not according to the invention

A first slurry was prepared by adding silica-alumina powder (alumina doped with 5wt% silica) was slurried in water and milling it to a d90 < 20 micron. Manganese nitrate and soluble platinum and palladium salts were added to the slurry. The mixture was stirred to homogenise. The resulting washcoat was applied to an axial length of 50% of the inlet channels of a 1.4 litre volume cordierite flow-through (honeycomb) monolith substrate with 62 cells per square centimetre (400 cells per square inch) using the established coating techniques. The coated part was dried. This first slurry washcoat coating had a PGM loading of 1.77 g/L (50 g ft⁻³) and a Pt:Pd weight ratio of 2:1. The manganese loading was 7.06 g/L (200 g ft⁻³).

A second slurry was prepared by milling silica-alumina powder (alumina doped with 5wt% silica) in water to a d90 < 20 micron. Ba acetate and soluble platinum and palladium salts were added to the slurry. The mixture was stirred to homogenise. The resulting washcoat was applied to an axial length of 50% of the inlet channels already coated to an axial length of 50% of the flow-through monolith substrate, i.e. the second slurry formed an upper washcoat layer coated on top of a lower layer formed from the first slurry. The part coated with the first two slurry washcoat coatings was dried and calcined at 500°C. This second washcoat slurry coating had a PGM loading of 1.77 g/L (50 g ft⁻³) and a Pt:Pd weight ratio of 2:1. The barium loading was as Reference Example 1.

A third slurry was prepared by adding beta zeolite to water. Pd nitrate was added followed by a boehmite binder at 20% of the zeolite loading by mass. The mixture was stirred to homogenise and applied to an axial length of 50% of the already coated inlet channels of the flow-through monolith substrate, i.e. the inlet axial 50% zone-coated length comprised a "stack" of three layers: the third slurry formed a top washcoat slurry layer coated on top of a middle layer formed from the second washcoat slurry and the second washcoat slurry layer was in turn coated on top of a bottom layer formed from the first washcoat slurry. The part coated with the first three slurry washcoat coatings was dried. The Pd loading of this third slurry washcoat coating was 0.71 g/L (20 g ft⁻³).

The total PGM loading on the 50% axial catalyst inlet zone was 4.24 g/L (120 g ft⁻³).

Finally, a fourth slurry was prepared by taking silica-alumina powder (alumina doped with 5wt% silica) and milling to a d₉₀ < 20 micron. Soluble platinum salt was added followed by manganese nitrate. The slurry was then stirred to homogenise. The resulting washcoat was applied to an axial length of 50% of the outlet channels of the flow-through (honeycomb) monolith substrate using the established coating techniques. The part coated with all four washcoat slurry coatings was dried and calcined at 500°C. The outlet coating had a total Pt loading of 2.12 g/L (60 g ft⁻³) and manganese loading of 3.53 g/L (100 g ft⁻³).

The total PGM loading of the substrate as a whole was 3.18 g/L (90 g ft⁻³) at a Pt:Pd weight ratio of 2.38:1.

### Example 3 - Zone-coated Bismuth-containing Three Layer Inlet Catalyst

A first slurry was prepared by adding silica-alumina powder (alumina doped with 5wt% silica) was slurried in water and milling it to a d90 < 20 micron. Bismuth nitrate and soluble platinum salt were added to the slurry. The mixture was stirred to homogenise. The resulting washcoat was applied to an axial length of 50% of the inlet channels of a 1.4 litre volume cordierite flow-through (honeycomb) monolith substrate with 62 cells per square centimetre (400 cells per square inch) using the established coating techniques. The coated part was dried. This first slurry washcoat coating had a Pt loading of 1.77 g/L (50 g ft⁻³) and a bismuth loading was 1.77 g/L (50 g ft⁻³).

A second slurry was prepared by milling silica-alumina powder (alumina doped with 5wt% silica) in water to a d90 < 20 micron. Ba acetate and soluble platinum and palladium salts were added to the slurry. The mixture was stirred to homogenise. The resulting washcoat was applied to an axial length of 50% of the already coated inlet channels of the flow-through monolith substrate, i.e. the second slurry formed an upper washcoat layer coated on top of a lower layer formed from the first slurry. The part coated with the first two slurry washcoat coatings was dried and calcined at 500°C. This second slurry washcoat coating had a PGM loading of 1.77 g/L (50 g ft⁻³) and a Pt:Pd weight ratio of 2:1. The barium loading was as Reference Example 1.

A third slurry was prepared by adding beta zeolite to water. Pd nitrate was added followed by a boehmite binder at 20% of the zeolite loading by mass. The mixture was stirred to homogenise and applied to an axial length of 50% of the already coated inlet channels of the flow-through monolith substrate, i.e. the inlet axial 50% zone-coated length comprised a "stack" of three layers, wherein the third slurry formed a top washcoat slurry layer coated on top of a middle layer formed from the second washcoat slurry and the second washcoat slurry layer was in turn coated on top of a bottom layer formed from the first washcoat slurry. The part coated with the first three slurry washcoat coatings was dried. The Pd loading of this third slurry washcoat coating was 0.71 g/L (20 g ft⁻³).

Finally, a fourth slurry was prepared by taking silica-alumina powder (alumina doped with 5wt% silica) and milling to a d₉₀ < 20 micron. Soluble platinum salt was added followed by manganese nitrate. The slurry was then stirred to homogenise. The resulting washcoat was applied to an axial length of 50% of the outlet channels of the flow-through (honeycomb) monolith substrate using the established coating techniques. The part coated with all four washcoat slurry coatings was dried and calcined at 500°C. The outlet coating had a total Pt loading of 2.12 g/L (60 g ft⁻³) and manganese loading of 3.53 g/L (100 g ft⁻³).

The total PGM loading on the 50% axial catalyst inlet zone was 4.24 g/L (120 g ft⁻³).

The total PGM loading of the substrate as a whole was 3.18 g/L (90 g ft⁻³) at a Pt:Pd weight ratio of 3.92:1.

### Testing

It will be noted that the PGM loading in each of the catalysts of Reference Example 1 and Examples 2 and 3 was identical.

Each of reference catalyst 1 and the catalysts of Examples 2 and 3 were fitted into an exhaust system of a 1.5 litre turbo charged diesel laboratory bench mounted engine. The catalytic activity was tested by stepwise increasing the load on the engine to increase the exhaust gas temperature. Concentrations of the exhaust gas pollutants were measured both pre- and post-catalyst. The oxidation activity for CO and HC is determined by the light off temperature whereby 50% conversion is achieved (T₅₀) for CO oxidation and 70% conversion (T₇₀) is achieved for HC oxidation. The CO and HC results are shown in Table 1.

### Results

**Table 1**

| **Catalyst Example** | **T₅₀ CO light off (°C)** | **T₇₀ HC light off (°C)** | **NO oxidation at 250°C (%)** |
|---|---|---|---|
| Example 1 (Reference) | 146 | 207 | 45 |
| Example 2 | 138 | 185 | 54 |
| Example 3 | 137 | 185 | 54 |

Results in Table 2 show that Examples 2 and 3 both have lower CO and HC light off than Example 1 and have higher NO oxidation activity at 250°C. Improved CO and HC oxidation activity can reduce catalytic inhibition effects and consequently improve NO oxidation.

### Reference Example 4 - Zone-coated Single Layer Inlet Catalyst

A reference catalyst was prepared similarly to the explanation for Reference Example 1 hereinabove, except in that the total PGM loading of the substrate as a whole was 4.59 g/L (130 g ft⁻³) at a Pt:Pd weight ratio of 3:1 (total loading of 2Pt:Pd in inlet-end coating is 6.36 g/L (180 g ft⁻³); and Pt loading in outlet-end coating 2.83 g/L (80 g ft⁻³ Pt).

### Example 5 - Zone-coated Manganese-containing Two Layer Inlet Catalyst (not according to the invention

A first slurry was prepared by adding silica-alumina powder (alumina doped with 5wt% silica) in water and milling it to a d90 < 20 micron. Manganese nitrate and soluble platinum and palladium salts were added to the slurry. The mixture was stirred to homogenise. The resulting washcoat was applied to an axial length of 50% of the inlet channels of a 1.4 litre volume cordierite flow-through (honeycomb) monolith substrate with 62 cells per square centimetre (400 cells per square inch) using the established coating techniques. The coated part was dried. The first slurry washcoat coating had a PGM loading of 5.65 g/L (160 g ft⁻³) and a Pt:Pd weight ratio of 2:1. The manganese loading was 7.06 g/L (200 g ft⁻³).

A second slurry was prepared by adding beta zeolite to water. Pd nitrate was added followed by a boehmite binder at 20% of the zeolite loading by mass. The mixture was stirred to homogenise and applied to an axial length of 50% of the already coated inlet channels of the flow-through monolith substrate, i.e. the second slurry formed an upper washcoat layer coated on top of a lower layer formed from the first slurry. The part including both the first and second slurry washcoat coatings was dried and calcined at 500°C. The Pd loading of the second washcoat coating was 0.71 g/L (20 g ft⁻³).

The total PGM loading on the catalyst 50% axial inlet zone was 6.36 g/L (180 g ft⁻³).

Finally, a third slurry was prepared by taking silica-alumina powder (alumina doped with 5wt% silica) and milling to a d₉₀ < 20 micron. Soluble platinum salt was added followed by manganese nitrate. The slurry was then stirred to homogenise. The resulting washcoat was applied to the outlet channels to an axial length of 50% of the flow-through (honeycomb) monolith substrate using the established coating techniques. The part coated with all three slurry coatings was dried and calcined at 500°C. The outlet coating had a total Pt loading of 2.83 g/L (80 g ft⁻³) and manganese loading of 3.53 g/L (100 g ft⁻³).

The total PGM loading of the substrate as a whole was 4.59 g/L (130 g ft⁻³) at a Pt:Pd weight ratio of 2.54:1.

### Example 6 - Zone-coated Manganese-containing Two Layer Inlet Catalyst (not according to the invention

A first slurry was prepared by adding silica-alumina powder (alumina doped with 5wt% silica) in water and milling it to a d90 < 20 micron. Manganese nitrate and soluble platinum and palladium salts were added to the slurry. The mixture was stirred to homogenise. The resulting washcoat was applied to an axial length of 50% of the inlet channels of a 1.4 litre volume cordierite flow-through (honeycomb) monolith substrate with 62 cells per square centimetre (400 cells per square inch) using the established coating techniques. The coated part was dried. The first slurry washcoat coating had a PGM loading of 3.53 g/L (100 g ft⁻³) and a Pt:Pd weight ratio of 2:1. The manganese loading was 7.1 g/L (200 g ft⁻³).

A second slurry was prepared by adding silica-alumina powder (alumina doped with 5wt% silica) in water and milling to a d₉₀ < 20 micron. Ba acetate and soluble platinum and palladium salts were added to the slurry followed by beta zeolite such that the slurry comprised 71% silica doped alumina and 29% zeolite by mass. The mixture was stirred to homogenise. The mixture was stirred to homogenise and applied to an axial length of 50% of the already coated inlet channels of the flow-through monolith substrate, i.e. the second slurry formed an upper washcoat layer coated on top of a lower layer formed from the first slurry. The part including both the first and second slurry washcoat coatings was dried and calcined at 500°C. The second slurry washcoat coating had a total PGM loading of 2.83 g/L (80 g ft⁻³) and a Pt:Pd weight ratio of 2:1 and the barium loading was 1.77 g/L (50 g ft⁻³).

The total PGM loading on the catalyst 50% axial inlet zone was 6.36 g/L (180 g ft⁻³).

Finally, a third slurry was prepared by taking silica-alumina powder (alumina doped with 5wt% silica) and milling to a d₉₀ < 20 micron. Soluble platinum salt was added followed by manganese nitrate. The slurry was then stirred to homogenise. The resulting washcoat was applied to the outlet channels to an axial length of 50% of the flow-through (honeycomb) monolith substrate using the established coating techniques. The part coated with all three slurry coatings was dried and calcined at 500°C. The outlet coating had a total Pt loading of 2.83 g/L (80 g ft⁻³) and manganese loading of 3.53 g/L (100 g ft⁻³).

The total PGM loading of the substrate as a whole was 4.59 g/L (130 g ft⁻³) at a Pt:Pd weight ratio of 3.3:1.

### Example 7 - Zone-coated Manganese-containing Three Layer Inlet Catalyst (not according to the invention

A first slurry was prepared by adding silica-alumina powder (alumina doped with 5wt% silica) was slurried in water and milling it to a d90 < 20 micron. Manganese nitrate and soluble platinum and palladium salts were added to the slurry. The mixture was stirred to homogenise. The resulting washcoat was applied to an axial length of 50% of the inlet channels of a 1.4 litre volume cordierite flow-through (honeycomb) monolith substrate with 62 cells per square centimetre (400 cells per square inch) using the established coating techniques. The part coated with the first slurry washcoat coating was dried. This first slurry washcoat coating had a PGM loading of 2.83 g/L (80 g ft⁻³) and a Pt:Pd weight ratio of 2:1. The manganese loading was 7.06 g/L (200 g ft⁻³).

A second slurry was prepared by adding beta zeolite to water. Soluble platinum and palladium salts were added to the slurry followed by a boehmite binder at 20% of the zeolite loading by mass. The mixture was stirred to homogenise and applied to an axial length of 50% of the already coated inlet channels of the flow-through monolith substrate, i.e. the second slurry formed an upper washcoat layer coated on top of a lower layer formed from the first slurry. The part including both the first and second slurry washcoat coatings was dried and calcined at 500°C. The PGM loading of this second slurry washcoat coating was 0.71 g/L (20 g ft⁻³) and a Pt:Pd weight ratio of 2:1.

A third slurry was prepared by milling silica-alumina powder (alumina doped with 5wt% silica) in water to a d90 < 20 micron (no zeolite). Ba acetate and soluble platinum and palladium salts were added to the slurry. The mixture was stirred to homogenise. The mixture was stirred to homogenise and applied to an axial length of 50% of the already coated inlet channels of the flow-through monolith substrate, i.e. the inlet axial 50% zone-coated length comprised a "stack" of three layers, wherein the third slurry formed a top washcoat slurry layer coated on top of a middle layer formed from the second washcoat slurry and the second washcoat slurry layer was in turn coated on top of a bottom layer formed from the first washcoat slurry. The part coated with the first three slurry washcoat coatings was dried. This third washcoat slurry coating had a PGM loading of 2.83 g/L (80 g ft⁻³) and a Pt:Pd weight ratio of 2:1. The barium loading was as Example 6.

The total PGM loading on the 50% axial catalyst inlet zone was 6.36 g/L (180 g ft⁻³).

Finally, a fourth slurry was prepared by taking silica-alumina powder (alumina doped with 5wt% silica) and milling to a d₉₀ < 20 micron. Soluble platinum salt was added followed by manganese nitrate. The slurry was then stirred to homogenise. The resulting washcoat was applied to an axial length of 50% of the outlet channels of the flow-through (honeycomb) monolith substrate using the established coating techniques. The part coated with all four washcoat slurry coatings was dried and calcined at 500°C. The outlet coating had a total Pt loading of 2.83 g/L (80 g ft⁻³) and manganese loading of 3.53 g/L (100 g ft⁻³).

The total PGM loading of the substrate as a whole was 4.59 g/L (130 g ft⁻³) at a Pt:Pd weight ratio of 2.55:1.

### Example 8 - Laboratory Activity Testing of Examples 4 to 7

Core samples were taken from the catalysts of Examples 4 to 7. The cores were hydrothermally aged in an oven at 800°C for 16 hours in an oven box. A constantly replenished gas mixture of compressed air/10% water (equivalent to 20% O₂) controlled by mass flow and liquid flow controllers respectively was pumped into the oven box at a flow rate of 6 litres per minute. The honeycomb substrate cores were arranged within the oven box so that the channels extended vertically and the flowing gas mixture was forced to enter the channels of each core disposed within the oven box from a lower end thereof.

It will be noted that the PGM loading in each of the catalysts of Reference Example 4 and Examples 5 to 7 inclusive was identical.

The catalytic activity for all cores was determined using a synthetic gas laboratory catalytic activity test (SCAT). The aged cores were tested in a simulated exhaust gas mixture shown in Table 2, wherein the inlet end, i.e. the channels having a two- or three-layered catalyst, was contacted first by the incoming gas. In each case the balance was nitrogen. Prior to each activity assessment, each aged catalyst core was first "pre-conditioned" in the SCAT apparatus by "soaking" to equilibrate each core sample at a 80°C catalyst inlet temperature in a gas mixture consisting of 4% CO₂, 4% H₂O, 14% O₂ and N₂ balance at 55,000 hr⁻¹ space velocity followed by switching the gas mixture to the gas mixture set out in Table 2 below and conducting a "fast ramp" from 80°C to 400°C at a temperature ramp rate of 100°C per minute. Following the "fast ramp" pre-conditioning, the catalyst core sample was cooled to the 80°C "soak" temperature in the gas mixture consisting of 4% CO₂, 4% H₂O, 14% O₂ and N₂ balance at 55,000 hr⁻¹ space velocity before two successive ramp tests were conducted.

Each ramp test was done by switching the exhaust gas mixture to the mixture set out in Table 2 and conducting a temperature ramp from 80°C to 400°C at 20°C per minute. Between each ramp test, the catalyst core sample was cooled and "soaked" at 80°C using the "soak gas" composition described above before the ramp test was repeated a second time.

**Table 2**

| **Gas Mixture Component** | **Constituent Amount** |
|---|---|
| CO | 1500 ppm (0.15%) |
| HC (as C₁) | 430 ppm (0.043%) |
| NO | 100 ppm (0.01%) |
| CO₂ | 4% |
| H₂O | 4% |
| O₂ | 14% |
| N₂ | Balance |
| Space velocity | 55,000/hour |

The hydrocarbon (HC) component was a mixture of four individual hydrocarbons: methane (CH₄), the shorter chain unsaturated hydrocarbon propene (C₂H₆), the longer chain saturated hydrocarbon decane (C₁₀H₂₂) and the aromatic hydrocarbon toluene (C₆H₅CH₃). Diesel fuel is a mixture of thousands of hydrocarbon compounds, most of which have carbon numbers between 10 and 22. Most of the compounds in diesel fuel are hydrocarbons of the paraffinic (e.g. decane), naphthenic, or aromatic class. In the test, toluene is used as a representative aromatic, although it is not generally a component of diesel fuel.

SCAT oxidation activity for CO and HC is reported by the light off temperature whereby 50% conversion is achieved (T₅₀) (the lower temperature, the more active the catalyst) SCAT results are shown in Tables 3. Additionally, the % HC conversion at 200°C and %NO₂ of total oxides of nitrogen (NOₓ) at 200°C and 250°C is reported (the higher the % value, the more active the catalyst at that temperature).

**Table 3**

| **Example No.** | **T₅₀ CO (°C)** | **T₅₀ HC (°C)** | **% HC conversion at 200°C** | **% NO₂/NO_{X} at 200°C** | **% NO₂/NO_{X} at 250°C** |
|---|---|---|---|---|---|
| 4 (Reference) | 155 | 159 | 86.4 | 46.1 | 76.8 |
| 5 | 116 | 139 | 83.1 | 33.8 | 71.7 |
| 6 | 140 | 151 | 82.5 | 33.5 | 73.4 |
| 7 | 130 | 146 | 87.8 | 50.2 | 78.2 |

The results presented in Table 3 indicate that the catalyst of Example 5 shows excellent CO and HC light-off activity, as shown by the lower CO and HC T₅₀ values relative to Reference Catalyst 4. However, NO₂/NOₓ activity at 200°C for the Example 5 catalyst is reduced relative to the reference. Applicant's inventors interpret the results for the Example 5 catalyst as follows: the initial good HC light-off performance of the Example 5 catalyst is from the oxidation of propene, while the decane and toluene are adsorbed in the zeolite inlet side top layer. As the exhaust gas temperature increases, the adsorbed decane and toluene are released above about 180°C and net %NO₂/NOₓ is impacted. This can be caused by one or both of the decane and toluene and the NO competing for oxidation catalyst sites in the downstream single-layer outlet end coating; and/or the decane and toluene reducing NO₂ generated on the catalyst according to the "Lean NOₓ Catalyst" reaction of reducing NOₓ, including NO₂, using hydrocarbons as a reductant over a supported PGM catalyst such as Pt (HC + NOₓ + O₂ - CO₂ + H₂O + N₂ or partial reduction to NO). The net effect of these reactions can be seen from the reduced %HC conversion and %NO₂/NOₓ activity at 200°C relative to the reference. Thus, while the Example 5 catalyst is an excellent HC and CO oxidation catalyst and can promote NO oxidation activity for a downstream device, such as a SCR catalyst, Applicant's results show that NO oxidation activity is impacted in this catalyst design.

The catalyst of Example 6 is a variation on the design of Example 5, wherein some of the PGM present in the first washcoat layer on the inlet end of Example 5 was introduced into the upper zeolite-containing layer. In theory, adsorbed hydrocarbons released from the zeolite at above about 180°C could be oxidised by PGM present in the zeolite layer. The results shown in Table 3 suggest that this approach was not wholly successful: although %NO₂/NOₓ at 250°C was improved over Example 5, %NO₂/NO at 200°C was similar to Example 5, but HC and CO T₅₀ light-off were not as good as Example 5, although still significantly better than the Reference.

The Example 7 catalyst design built on this understanding by including PGM from the first washcoat slurry layer in the Example 5 catalyst in new, third layer on top of the PGM/zeolite layer. It can be seen from the results for the Example 7 catalyst that CO and HC T₅₀ light-off are both improved relative to Example 6 and approach the activity of the Example 5 catalyst in this respect. The inventors believe that this improvement results from the removal of an oxidation component active for toluene and decane oxidation (i.e. an HC oxidation component) from the top layer of the inlet zone from the zeolite HC adsorber component of the Example 6 catalyst design and the layering of that HC oxidation component on top of a layer comprising the zeolite HC adsorber in a three-layer inlet zone construct. Functionally, the results appear to show that as the temperature increases and HC adsorbed on the zeolite in the middle layer of the inlet zone is desorbed, in order to exit the catalyst layer structure, the HC has to pass through a layer including the HC oxidation component, improving the oxidation of the released HC. This can be seen from the better %HC conversion at 200°C.

An additional benefit of the Example 7 design is that, by improving HC oxidation in the inlet zone, there is less competition for NO oxidation in the single layer outlet zone catalyst, so that NO oxidation is also improved relative to the Example 5 or 6 catalysts (see the %NO₂/NOₓ conversion at 200°C and 250°C).

It is recognised, however, that a three-layer inlet catalyst design increases process and manufacturing costs because it requires an additional application of a third washcoat layer at the inlet relative to the catalyst designs of Examples 5 and 6, which have only two layers in the inlet end zone.

### Reference Example 9 - Zone-coated Single Layer Inlet Catalyst

A reference catalyst was prepared similarly to the explanation for Reference Example 1 hereinabove, except in that the total PGM loading of the substrate as a whole was 4.24 g/L (120 g ft⁻³) at a Pt:Pd weight ratio of 5:1 (total loading of 2Pt:Pd in the inlet-end coating is 4.24 g/L (120 g ft⁻³); and Pt loading in the outlet-end coating 4.24 g/L (120 g ft⁻³ Pt); and the second slurry comprised a "pre-formed" 3.2wt% manganese-/5wt% silica-doped alumina to an equivalent manganese loading of 3.53 g/L (100 g ft⁻³) instead of manganese nitrate).

### Example 10 - Zone-coated Manganese-containing Two Layer Inlet Catalyst (not according to the invention

A catalyst was prepared similarly to the explanation for Example 5 hereinabove, except in that the total PGM loading of the substrate as a whole was 4.24 g/L (120 g ft⁻³) at a Pt:Pd weight ratio of 3:1 (total PGM loading of first slurry layer was 5.65 g/L (160 g ft⁻³); and the Pt loading in the outlet-end coating 4.24 g/L (120 g ft⁻³ Pt)).

### Example 11 - Zone-coated Manganese-containing Two Layer Inlet Catalyst (not according to the invention

A catalyst was prepared similarly to the explanation for Example 6 hereinabove, except in that the total PGM loading of the substrate as a whole was 4.24 g/L (120 g ft⁻³) at a Pt:Pd weight ratio of 5:1 (total PGM loading of first slurry layer was 2.42 g/L (68.6 g ft⁻³); the total PGM loading of the second slurry layer was 1.82 g/L (51.4 g ft⁻³); the Pt loading in the outlet-end coating 4.24 g/L (120 g ft⁻³ Pt); and the third slurry comprised a "pre-formed" 3.2wt% manganese-/5wt% silica-doped alumina to an equivalent manganese loading of 3.53 g/L (100 g ft⁻³) instead of manganese nitrate).

### Example 12 - Zone-coated Bismuth-containing Two Layer Inlet Catalyst

A first slurry was prepared by adding silica-alumina powder (alumina doped with 5wt% silica) in water and milling it to a d90 < 20 micron. Bismuth nitrate and soluble platinum salt were added to the slurry. The mixture was stirred to homogenise. The resulting washcoat was applied to an axial length of 50% of the inlet channels of a 1.4 litre volume cordierite flow-through (honeycomb) monolith substrate with 62 cells per square centimetre (400 cells per square inch) using the established coating techniques. The coated part was dried. The first slurry washcoat coating had a Pt loading of 2.42 g/L (68.6 g ft⁻³). The bismuth loading was 2.12 g/L (60 g ft⁻³).

A second slurry was prepared by adding silica-alumina powder (alumina doped with 5wt% silica) in water and milling to a d₉₀ < 20 micron. Ba acetate and soluble platinum and palladium salts were added to the slurry followed by beta zeolite such that the slurry comprised 71% silica doped alumina and 29% zeolite by mass. The mixture was stirred to homogenise. The mixture was stirred to homogenise and applied to an axial length of 50% of the already coated inlet channels of the flow-through monolith substrate, i.e. the second slurry formed an upper washcoat layer coated on top of a lower layer formed from the first slurry. The part including both the first and second slurry washcoat coatings was dried and calcined at 500°C. The second slurry washcoat coating had a total PGM loading of 1.82 g/L (51.4 g ft⁻³) and a Pt:Pd weight ratio of 2:1 and the barium loading was 1.77 g/L (50 g ft⁻³).

The total PGM loading on the catalyst 50% axial inlet zone was 120 g/L (4.24 g ft⁻³).

Finally, a third slurry was prepared by taking and the third slurry comprised a "pre-formed" 3.2wt% manganese-/5wt% silica-doped alumina and milling to a d₉₀ < 20 micron. Soluble platinum salt was added. The slurry was then stirred to homogenise. The resulting washcoat was applied to the outlet channels to an axial length of 50% of the flow-through (honeycomb) monolith substrate using the established coating techniques. The part coated with all three slurry coatings was dried and calcined at 500°C. The outlet coating had a total Pt loading of 4.24 g/L (120 g ft⁻³) and a manganese loading equivalent to 3.53 g/L (100 g ft⁻³).

The total PGM loading of the substrate as a whole was 4.24 g/L (120 g ft⁻³) at a Pt:Pd weight ratio of 13: 1.

### Example 13 - Laboratory Activity Testing of Examples 9 to 12

It will be noted that the PGM loading in each of the catalysts of Reference Example 9 and Examples 10 to 12 inclusive was identical.

The procedure described in Example 8 was repeated and the results for comparative testing of Reference Example 9 and Examples 10 to 12 are set out in Table 4 below. Note that the temperature at which 60% of the CO and hydrocarbons was converted (T₆₀) is reported instead of the T₅₀ reported in Table 3 above; and only the %NO₂/NOₓ conversion at 225°C is reported instead of the conversion at both 200°C and 250°C. Additionally, catalyst sample cores aged at 700°C but otherwise all other conditions being the same as described in Example 8 are reported in Table 5.

**Table 4 - Results for 800°C/16-hour lean-hydrothermal aged samples**

| **Example No.** | **T₆₀ CO (°C)** | **T₆₀ HC (°C)** | **% NO₂/NO_{X} at 225°C** |
|---|---|---|---|
| 9 (Reference) | 159.9 | 168.9 | 58 |
| 10 | 151.3 | 167.1 | 43 |
| 11 | 157.9 | 173.5 | 42 |
| 12 | 146.0 | 169.2 | 50 |

**Table 5 - Results for 700°C/16-hour lean-hydrothermal aged samples**

| **Example No.** | **T₆₀ CO (°C)** | **T₆₀ HC (°C)** | **% NO₂/NO_{X} at 225°C** |
|---|---|---|---|
| 9 (Reference) | 147.1 | 160.5 | 66 |
| 10 | 109.8 | 138.9 | 64 |
| 11 | 132.5 | 150.8 | 70 |
| 12 | 118.1 | 152.5 | 72 |

From a comparison of the results shown in Tables 4 and 5 it can be seen that the catalyst of Example 10 performs the best for CO and HC oxidation of any of Examples 10 to 12 inclusive at 700°C (see Table 5). However, at the higher ageing temperature (see Table 4), the bismuth-containing catalyst of Example 12 becomes the superior CO oxidation catalyst of the comparison. That is, the bismuth-containing catalyst appears to be more thermally durable than either the Example 10 or 11 catalysts.

### Reference Example 14 - Zone-coated Single Layer Inlet Catalyst

A reference catalyst was prepared similarly to the explanation for Reference Example 1 hereinabove, except in that the total PGM loading of the substrate as a whole was 4.59 g/L (112.8 g ft⁻³) at a Pt:Pd weight ratio of 3:1 (total loading of 2Pt:Pd in the inlet-end coating is 5.98 g/L (169.2 g ft⁻³); and Pt loading in the outlet-end coating 1.99 g/L (56.4 g ft⁻³ Pt); and the second slurry comprised a "pre-formed" 3.2wt% manganese-/5wt% silica-doped alumina to an equivalent manganese loading of 3.53 g/L (100 g ft⁻³) instead of manganese nitrate).

### Reference Example 15 - Zone-coated Bismuth-containing Single Layer Inlet Catalyst

A catalyst was prepared similarly to the explanation for Reference Example 14 hereinabove, except in that the PGM present in the first slurry washcoat/inlet-end coating was platinum only (no palladium) at a total Pt loading of 5.98 g/L (169.2 g ft⁻³); instead of barium in the first slurry washcoat/inlet-end coating, the promoter was bismuth (from bismuth nitrate) at a loading in the inlet-end coating of 2.12 g/L (60 g ft⁻³) and no beta zeolite was included in the slurry for the inlet end coating.

### Reference Example 16 - Zone-coated Bismuth-containing Single Layer Inlet Catalyst

A catalyst was prepared similarly to the explanation for Reference Example 15 hereinabove, except in that in addition to bismuth the first slurry washcoat/inlet-end coating contained beta zeolite such that the slurry comprised 77% silica doped alumina and 23% zeolite by mass. In other words, the formulation was a Reference Example 14, wherein the barium was exchanged for bismuth (from bismuth nitrate) at a loading in the inlet-end coating of 2.12 g/L (60 g ft⁻³).

### Example 17 - Zone-coated Bismuth-containing Two Layer Inlet Catalyst

A first slurry was prepared by adding silica-alumina powder (alumina doped with 5wt% silica) in water and milling it to a d90 < 20 micron. Bismuth nitrate and soluble platinum salt were added to the slurry. The mixture was stirred to homogenise. The resulting washcoat was applied to an axial length of 50% of the inlet channels of a 1.4 litre volume cordierite flow-through (honeycomb) monolith substrate with 62 cells per square centimetre (400 cells per square inch) using the established coating techniques. The coated part was dried. The first slurry washcoat coating had a Pt loading of 2.20 g/L (62.4 g ft⁻³). The bismuth loading was 1.77 g/L (50 g ft⁻³).

A second slurry was prepared by adding silica-alumina powder (alumina doped with 5wt% silica) in water and milling to a d₉₀ < 20 micron. Ba acetate and soluble platinum and palladium salts were added to the slurry followed by beta zeolite such that the slurry comprised 77% silica doped alumina and 23% zeolite by mass. The mixture was stirred to homogenise. The mixture was stirred to homogenise and applied to an axial length of 50% of the already coated inlet channels of the flow-through monolith substrate, i.e. the second slurry formed an upper washcoat layer coated on top of a lower layer formed from the first slurry. The part including both the first and second slurry washcoat coatings was dried and calcined at 500°C. The second slurry washcoat coating had a total PGM loading of 3.77 g/L (106.8 g ft⁻³) and a Pt:Pd weight ratio of 2.8:1 and the barium loading was 4.41 g/L (125 g ft⁻³).

The total PGM loading on the catalyst 50% axial inlet zone was 5.98 g/L (169.2 g ft⁻³).

Finally, a third slurry was prepared by taking and the third slurry comprised a "pre-formed" 3.2wt% manganese-/5wt% silica-doped alumina and milling to a d₉₀ < 20 micron. Soluble platinum salt was added. The slurry was then stirred to homogenise. The resulting washcoat was applied to the outlet channels to an axial length of 50% of the flow-through (honeycomb) monolith substrate using the established coating techniques. The part coated with all three slurry coatings was dried and calcined at 500°C. The outlet coating had a total Pt loading of 1.99 g/L (56.4 g ft⁻³) and a manganese loading equivalent to 3.53 g/L (100 g ft⁻³).

The total PGM loading of the substrate as a whole was 3.98 g/L (112.8 g ft⁻³) at a Pt:Pd weight ratio of 7.1:1.

### Example 18 - Laboratory Activity Testing of Examples 14 to 17

It will be noted that the PGM loading in each of the catalysts of Reference Examples 14, 15 and 16 and Example 17 was identical.

The procedure described in Example 8 was repeated and the results for comparative testing of Reference Examples 14, 15 and 16 and Example 17 are set out in Table 6 below. Note that the temperature at which 60% of the hydrocarbons was converted (T₆₀) is reported instead of the T₅₀ reported in Table 3 above; and only the %NO₂/NOₓ conversion at 250°C is reported. Additionally, a simple cumulative sum of all data points for N₂O detected in outlet exhaust gas over the 80-400°C test ramp is reported, as identified by Fourier Transform Infrared (ppm). This is different from a value of absolute ppm detected, which would require integration of detected values and correlation to mass of gas and volume of catalyst etc. Nevertheless, the values reported are informative in that they are representative of the ability of a catalyst to suppress N₂O formation. Inventors expect that the relative amounts of N₂O reported would be reflected in a full integrated analysis of absolute ppm and the trends indicated would be expected to be repeated.

**Table 6 - Results for 800°C/16-hour lean-hydrothermal aged samples**

| **Example No.** | **T₅₀ CO (°C)** | **T₆₀ HC (°C)** | **% NO₂/NO_{X} at 225°C** | **Cumulative detected values of N₂O (relative)** |
|---|---|---|---|---|
| 14 (Reference) | 156.6 | 165.6 | 58 | 1107.3 |
| 15 (Reference) | 143.9 | 161.3 | 69 | 1884.4 |
| 16 (Reference) | 153.0 | 164.8 | 66 | 2755.7 |
| 17 | 142.8 | 156.7 | 73 | 910.5 |

From a review the results shown in Table 6, it can be seen that the addition of the beta zeolite to the bismuth-containing inlet-end zone is detrimental to CO performance and also causes a significant increase in N₂O (compare the results for Reference Examples 15 and 16). However, all bismuth-containing catalysts are more active for NO oxidation than the reference.

By removing the beta zeolite from the inlet-end coating of Reference Example 16 to an overlayer at the inlet end, CO oxidation is returned to the performance of the single-layer catalyst of Reference Example 15, but with improved HC and NO oxidation activity.

Additionally, a comparison of the results for Examples 12 and 17 shown in Tables 4 and 6 - although at slightly different total PGM loadings (4.24 g/L (120 g ft⁻³) at a Pt:Pd weight ratio of 13:1 for Example 12; and 3.98 g/L (112.8 g ft⁻³) at a Pt:Pd weight ratio of 7.1:1 for Example 17) show that by removing some of the platinum from the outlet zone in Example 12 and repositioning it in the top layer on the inlet end zone, CO and HC oxidation performance can be boosted and NO₂ oxidation trimmed back to accommodate different diesel oxidation catalyst application needs.

### Reference Example 19 - Zone-coated Single Layer Inlet Catalyst

A reference catalyst was prepared similarly to the explanation for Reference Example 9 hereinabove, except in that the total PGM loading of the substrate as a whole was 5.30 g/L (150 g ft⁻³) at a Pt:Pd weight ratio of 4:1 (total loading of 2Pt:Pd in the inlet-end coating is 6.78 g/L (192 g ft⁻³); and Pt loading in the outlet-end coating 3.81 g/L (108 g ft⁻³ Pt)).

### Example 20 - Zone-coated Bismuth-containing Three Layer Inlet Catalyst (Bismuth in Bottom Inlet Zone Layer)

A catalyst was prepared similarly to the explanation for Example 3 hereinabove, except in that the total PGM loading of the substrate as a whole was 5.30 g/L (150 g/ft⁻³) at a Pt:Pd weight ratio of 4.4:1, wherein the first slurry washcoat coating had a platinum (no palladium) loading of 3.74 g/L (106 g ft⁻³); the second slurry washcoat coating had a total PGM loading at a Pt:Pd weight ratio of 2:1 of 3.74 g/L (106 g ft⁻³); the third slurry washcoat coating was as described in Example 3; and the fourth slurry washcoat coating had a platinum (no palladium) loading of 2.44 g/L (69 g ft⁻³).

The total PGM loading on the catalyst 50% axial inlet zone was 8.19 g/L (232g ft⁻³).

### Example 21 - Zone-coated Bismuth-containing Three Layer Inlet Catalyst (Bismuth in Middle Inlet Zone Layer)

A catalyst was prepared similarly to the explanation for Example 20 hereinabove, except in that the coating order to the first slurry washcoat coating and the second slurry washcoat coating was reversed. That is, instead of the bismuth-containing layer being coated directly onto the substrate to form the bottom layer of the three-layer inlet zone and the 2:1 Pt/Pd and barium-containing layer being coated on top of the bottom bismuth layer to form a middle layer of the three-layer inlet zone (as in Examples 3 and 20), in the Example 21 catalyst, the 2:1 Pt/Pd and barium-containing layer was instead coated directly onto the substrate and the bismuth-containing layer was coated onto the barium-containing layer to form the middle layer.

### Example 22 - Zone-coated Bismuth-containing Two Layer Inlet Catalyst

A catalyst was prepared similarly to the explanation for Example 17 hereinabove, except in that the total PGM loading of the substrate as a whole was 5.30 g/L (150 g ft⁻³) at a Pt:Pd weight ratio of 6.78:1 (total Pt loading of first slurry layer was 4.10 g/L (116 g ft⁻³); the total PGM loading of the second slurry layer was 4.10 g/L (116 g ft⁻³) at a Pt:Pd weight ratio of 2:1; and the total Pt loading in the third slurry was 2.44 g/L (69 g ft⁻³)). Additionally, instead of the "pre-formed" 3.2wt% manganese-/5wt% silica-doped alumina in the third slurry, the third slurry comprised alumina doped with 5wt% silica and manganese nitrate to produce a manganese loading in the third washcoat slurry coating of 3.53 g/L (100 g ft⁻³) (see e.g. the explanation for Reference Example 1); and the second slurry washcoat comprised 63% silica doped alumina and 37% zeolite by mass).

### Example 23 - Zone-coated Bismuth-containing Two Layer Inlet Catalyst

A catalyst was prepared similarly to the explanation for Example 5 hereinabove, except in that, bismuth (from bismuth nitrate) was exchanged for the manganese in the first slurry and in that the first slurry contained soluble platinum salt only (no palladium). The total PGM loading of the substrate as a whole was 5.30 g/L (150 g ft⁻³) at a Pt:Pd weight ratio of 11:1 (total Pt loading of the first slurry layer was 7.27 g/L (206 g ft⁻³); the total Pd loading of the second slurry layer was 0.88 g/L (25 g ft⁻³); and the total Pt loading in the third slurry was 2.44 g/L (69 g ft⁻³).

### Example 24 - Zone-coated Bismuth-containing Two Layer Inlet Catalyst (Zeolite in Bismuth layer)

A catalyst was prepared similarly to the explanation for Example 17 hereinabove, except in that the total PGM loading of the substrate as a whole was 5.30 g/L (150 g ft⁻³) at a Pt:Pd weight ratio of 6.78: 1 (total Pt loading of first slurry layer was 4.10 g/L (116 g ft⁻³); the total PGM loading of the second slurry layer was 4.10 g/L (116 g ft⁻³) at a Pt:Pd weight ratio of 2:1; and the total Pt loading in the third slurry was 2.44 g/L (69 g ft⁻³)). Additionally, instead of the "pre-formed" 3.2wt% manganese-/5wt% silica-doped alumina in the third slurry, the third slurry comprised alumina doped with 5wt% silica and manganese nitrate to produce a manganese loading in the third washcoat slurry coating of 3.53 g/L (100 g ft⁻³) (see e.g. the explanation for Reference Example 1); the bismuth-containing first slurry washcoat comprised 77% silica doped alumina and 23% zeolite by mass).

### Example 25 - Laboratory Activity Testing of Examples 19 to 24

It will be noted that the PGM loading in each of the catalysts of Reference Example 19 and Examples 20 to 24 inclusive was identical.

The procedure described in Example 18 was repeated, except in that the ageing conditions were 850°C for 16 hours. The results for comparative testing of Reference Example 19 and Examples 20 to 24 are set out in Table 7 below. Note that only the T₅₀ light-off temperature for NO oxidation is reported. It will be noted that the lower the T₅₀ for CO and NO and T₆₀ for HC, the more active the oxidation catalyst

**Table 7 - Results for 850°C/16-hour lean-hydrothermal aged samples**

| **Example No.** | **T₅₀ CO (°C)** | **T₆₀ HC (°C)** | **T₅₀ NO (°C)** |
|---|---|---|---|
| 19 (Reference) | 142 | 149 | 219 |
| 20 | 133 | 139 | 209 |
| 21 | 136 | 146.5 | 215 |
| 22 | 141 | 149 | 260 |
| 23 | 138 | 154 | 251 |
| 24 | 144.5 | 150.5 | 249 |

From a review the results shown in Table 7, it can be seen that from a comparison of the results for the three-layer catalysts in Examples 20 and 21, the location of the bismuth-containing washcoat layer in the bottom layer of the three-layer inlet zone is more beneficial for CO, HC and NO oxidation.

For Examples 22, 23 and 24, which each comprise two-layer inlet zones, reducing the quantity of platinum in the bismuth-containing layer appears to reduce CO oxidation and NO activity but the relocation of some of the platinum from the bismuth-containing layer to the top layer and the addition of barium in the top layer improves HC oxidation activity (compare the results for Examples 22 and 23).

A comparison of Examples 22 and 24 shows that the addition of beta zeolite to the bismuth-containing inlet-end zone is detrimental to CO performance, although NO oxidation is improved.

## Claims

1. A layered diesel oxidation catalyst for treatment of exhaust gas emissions from a diesel engine comprising a flow-through monolith substrate having a honeycomb structure and comprising a front zone and a rear zone, wherein the front zone of the substrate comprises a combination of layers, one on top of another and comprising two or more of layers A, B and C; and the rear zone comprises Layer D, wherein:
i. Layer A comprises platinum, palladium, or combinations thereof on a molecular sieve;
ii. Layer B comprises 1) platinum, palladium, or combinations thereof on a refractory metal oxide support; and 2) an alkaline earth metal, preferably barium, strontium or combinations thereof;
iii. Layer C comprises 1) a platinum group metal, which is platinum or a combination of both platinum and palladium on a refractory metal oxide support; and 2) a promoter metal, which is bismuth, wherein layer C is a bottom layer coated on the substrate; and
layer D comprises 1) platinum or a combination of both platinum and palladium on a refractory metal oxide support; and 2) manganese (Mn),, wherein the combination of layers in the front zone comprises: (i) Layer A and Layer C; (ii) Layer B and Layer C; or (iii) Layer A, Layer B, and Layer C.

2. The layered diesel oxidation catalyst according to claim 1, feature (i) or (iii), wherein Layer A is a top layer, coated over at least a portion of a middle layer and/or a bottom layer.

3. The layered diesel oxidation catalyst according to claim 2, feature (ii) or (iii), wherein Layer B is a top layer, coated over at least a portion of a middle layer and/or a bottom layer.

4. The layered diesel oxidation catalyst according to any preceding claim, wherein a platinum to palladium weight ratio in Layer C is 1:0 ≥ 15:1

5. The layered diesel oxidation catalyst according to any preceding claim, wherein Layer C is free of molecular sieve.

6. The layered diesel oxidation catalyst according to any preceding claim, wherein Layer B comprises platinum and palladium in a weight ratio of 4:1 ≥ 0.5:1.

7. The layered diesel oxidation catalyst according to any preceding claim, wherein Layer B comprises a molecular sieve.

8. The layered diesel oxidation catalyst according to any preceding claim, wherein the molecular sieve of Layer A and/or Layer B comprises MFI, FAU, or BEA; preferably BEA.

9. The layered diesel oxidation catalyst according to any preceding claim, wherein the substrate has an axial length and the front zone is from 20 to 80% of the axial length of the substrate and the rear zone is from 80 to 20% of the axial length of the substrate.

10. A system for treatment of a diesel engine exhaust stream including hydrocarbons, carbon monoxide, and other exhaust gas components, the emission treatment system comprising:
a. an exhaust gas conduit in fluid communication with the diesel engine via an exhaust gas manifold;
b. the layered diesel oxidation catalyst of any one of the preceding claims, wherein the front zone is oriented to the upstream side; and
c. one or more of the following in fluid communication with the layered diesel oxidation catalyst: a soot filter, a selective catalytic reduction (SCR) catalyst, a selective catalytic reduction filter catalyst and a NOx storage and reduction catalyst.

11. The system of claim 10, wherein element c. comprises an SCR catalyst or a selective catalytic reduction filter catalyst located downstream from the layered diesel oxidation catalyst.

## Patentansprüche

1. Geschichteter Dieseloxidationskatalysator für die Behandlung von Abgasemissionen aus einem Dieselmotor, umfassend ein Durchflussmonolithsubstrat, das eine Wabenstruktur aufweist, und umfassend eine vordere Zone und eine hintere Zone, wobei die vordere Zone des Substrats eine Kombination von Schichten, die übereinander liegen, umfasst und umfassend zwei oder mehr von den Schichten A, B und C; und wobei die hintere Zone Schicht D umfasst, wobei:
i. Schicht A Platin, Palladium oder Kombinationen davon auf einem Molekularsieb umfasst;
ii. Schicht B 1) Platin, Palladium oder Kombinationen davon auf einem hitzebeständigen Metalloxidträger; und 2) ein Erdalkalimetall, vorzugsweise Barium, Strontium oder Kombinationen davon umfasst;
iii. Schicht C 1) ein Platingruppenmetall, das Platin oder eine Kombination aus sowohl Platin als auch Palladium auf einem hitzebeständigen Metalloxidträger ist; und 2) ein Promotormetall, das Bismut ist umfasst, wobei Schicht C eine untere Schicht ist, die auf das Substrat beschichtet ist; und
Schicht D 1) Platin oder eine Kombination aus sowohl Platin als auch Palladium auf einem hitzebeständigen Metalloxidträger; und 2) Mangan (Mn) umfasst, wobei die Kombination von Schichten in der vorderen Zone umfasst: (i) Schicht A und Schicht C; (ii) Schicht B und Schicht C; oder (iii) Schicht A, Schicht B und Schicht C.

2. Geschichteter Dieseloxidationskatalysator nach Anspruch 1, Merkmal (i) oder (iii), wobei Schicht A eine obere Schicht ist, die über mindestens einen Abschnitt einer mittleren Schicht und/oder einer unteren Schicht beschichtet ist.

3. Geschichteter Dieseloxidationskatalysator nach Anspruch 2, Merkmal (ii) oder (iii), wobei Schicht B eine obere Schicht ist, die über mindestens einen Abschnitt einer mittleren Schicht und/oder eine untere Schicht beschichtet ist.

4. Geschichteter Dieseloxidationskatalysator nach einem der vorstehenden Ansprüche, wobei ein Platin zu Palladium Gewichtsverhältnis in Schicht C 1:0 ≥ 15:1 beträgt.

5. Geschichteter Dieseloxidationskatalysator nach einem der vorstehenden Ansprüche, wobei Schicht C frei von einem Molekularsieb ist.

6. Geschichteter Dieseloxidationskatalysator nach einem der vorstehenden Ansprüche, wobei Schicht B Platin und Palladium in einem Gewichtsverhältnis von 4:1 ≥ 0,5:1 umfasst.

7. Geschichteter Dieseloxidationskatalysator nach einem der vorstehenden Ansprüche, wobei Schicht B ein Molekularsieb umfasst.

8. Geschichteter Dieseloxidationskatalysator nach einem der vorstehenden Ansprüche, wobei das Molekularsieb von Schicht A und/oder Schicht B MFI, FAU oder BEA umfasst; vorzugsweise BEA.

9. Geschichteter Dieseloxidationskatalysator nach einem der vorstehenden Ansprüche, wobei das Substrat eine Axiallänge aufweist und die vordere Zone von 20 bis 80 % der Axiallänge des Substrats beträgt und die hintere Zone von 80 bis 20 % der Axiallänge des Substrats beträgt.

10. System für die Behandlung eines Dieselmotorabgasstroms, einschließlich Kohlenwasserstoffe, Kohlenmonoxid und anderen Abgaskomponenten, das Emissionsbehandlungssystem umfassend:
a. eine Abgasleitung in Fluidkommunikation mit dem Dieselmotor über einen Abgaskrümmer;
b. den geschichteten Dieseloxidationskatalysator nach einem der vorstehenden Ansprüche, wobei die vordere Zone auf die stromaufwärtige Seite ausgerichtet ist; und
c. eines oder mehrere von den Folgenden in Fluidkommunikation mit dem geschichteten Dieseloxidationskatalysator: einem Rußfilter, einem selektiven katalytischen Reduktionskatalysator (SCR-Katalysator), einem selektiven katalytischen Reduktionsfilterkatalysator und einem NOx-Speicher- und Reduktionskatalysator.

11. System nach Anspruch 10, wobei Element c. einen SCR-Katalysator oder einen selektiven katalytischen Reduktionsfilterkatalysator umfasst, der sich stromabwärts des geschichteten Dieseloxidationskatalysators befindet.

## Revendications

1. Catalyseur d'oxydation diesel en couches destiné au traitement d'émissions de gaz d'échappement d'un moteur diesel, comprenant un substrat monolithe à écoulement traversant ayant une structure en nid d'abeilles et comprenant une zone avant et une zone arrière, la zone avant du substrat comprenant une combinaison de couches, les unes au-dessus des autres et comprenant au moins deux parmi des couches A, B et C ; et la zone arrière comprend une Couche D, dans lequel :
i. la Couche A comprend du platine, du palladium, ou des combinaisons de ceux-ci sur un tamis moléculaire ;
ii. la Couche B comprend 1) du platine, du palladium, ou des combinaisons de ceux-ci sur un support en oxyde de métal réfractaire ; et 2) un métal alcalino-terreux, de préférence du baryum, du strontium ou des combinaisons de ceux-ci ;
iii. la Couche C comprend 1) un métal du groupe du platine, qui est du platine ou une combinaison à la fois de platine et de palladium sur un support en oxyde de métal réfractaire ; et 2) un métal promoteur, qui est du bismuth, dans lequel la couche C est une couche inférieure revêtue sur le substrat ; et
la couche D comprend 1) du platine ou une combinaison à la fois de platine et de palladium sur un support en oxyde de métal réfractaire ; et 2) du manganèse (Mn),, dans lequel la combinaison de couches dans la zone avant comprend : (i) Couche A et Couche C ; (ii) Couche B et Couche C ; ou (iii) Couche A, Couche B, et Couche C.

2. Catalyseur d'oxydation diesel en couches selon la revendication 1, point (i) ou (iii), dans lequel la Couche A est une couche supérieure, revêtue sur au moins une partie d'une couche intermédiaire et/ou d'une couche inférieure.

3. Catalyseur d'oxydation diesel en couches selon la revendication 2, point (ii) ou (iii), dans lequel la Couche B est une couche supérieure, revêtue sur au moins une partie d'une couche intermédiaire et/ou d'une couche inférieure.

4. Catalyseur d'oxydation diesel en couches selon une quelconque revendication précédente, dans lequel un rapport pondéral du platine au palladium dans la Couche C est de 1:0 ≥ 15:1.

5. Catalyseur d'oxydation diesel en couches selon une quelconque revendication précédente, dans lequel la Couche C est exempte de tamis moléculaire.

6. Catalyseur d'oxydation diesel en couches selon une quelconque revendication précédente, dans lequel la Couche B comprend du platine et du palladium dans un rapport pondéral de 4:1 ≥ 0,5:1.

7. Catalyseur d'oxydation diesel en couches selon une quelconque revendication précédente, dans lequel la Couche B comprend un tamis moléculaire.

8. Catalyseur d'oxydation diesel en couches selon une quelconque revendication précédente, dans lequel le tamis moléculaire de la Couche A et/ou de la Couche B comprend MFI, FAU, ou BEA ; de préférence BEA.

9. Catalyseur d'oxydation diesel en couches selon une quelconque revendication précédente, dans lequel le substrat a une longueur axiale et la zone avant représente de 20 à 80 % de la longueur axiale du substrat et la zone arrière représente de 80 à 20 % de la longueur axiale du substrat.

10. Système destiné au traitement d'un courant d'échappement de moteur diesel comportant des hydrocarbures, du monoxyde de carbone, et d'autres composants de gaz d'échappement, le système de traitement d'émissions comprenant :
a. un conduit de gaz d'échappement en communication fluidique avec le moteur diesel par l'intermédiaire d'un collecteur de gaz d'échappement ;
b. le catalyseur d'oxydation diesel en couches selon l'une quelconque des revendications précédentes, dans lequel la zone avant est orientée vers le côté en amont ; et
c. un ou plusieurs de ce qui suit en communication fluidique avec le catalyseur d'oxydation diesel en couches : un filtre à suie, un catalyseur de réduction catalytique sélective (SCR), un catalyseur de filtre de réduction catalytique sélective et un catalyseur de stockage et réduction de NOx.

11. Système selon la revendication 10, dans lequel l'élément c. comprend un catalyseur SCR ou un catalyseur de filtre de réduction catalytique sélective localisé en aval du catalyseur d'oxydation diesel en couches.
